(19) Europäisches Patentamt
European Patent Office
Office européen des brevets

(11) **EP 3 875 820 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **21160258.6**

(22) Anmeldetag: **02.03.2021**

(51) Internationale Patentklassifikation (IPC):
***F16K 37/00*** *(2006.01)*

(52) Gemeinsame Patentklassifikation (CPC):
**F16K 37/0083; F16K 37/0091**

(54) **VERFAHREN ZUM ÜBERPRÜFEN DER FUNKTIONSFÄHIGKEIT EINES SICHERHEITSVENTILS**

METHOD FOR VERIFYING THE OPERABILITY OF A SAFETY VALVE

PROCEDE POUR VERIFIER LE FONCTIONNEMENT D'UNE SOUPAPE DE SECURITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2020   DE 102020105695**

(43) Veröffentlichungstag der Anmeldung:
**08.09.2021   Patentblatt 2021/36**

(73) Patentinhaber: **Samson Aktiengesellschaft**
**60314 Frankfurt am Main (DE)**

(72) Erfinder: **Boll, Tobias**
**60385 Frankfurt am Main (DE)**

(74) Vertreter: **Köllner & Partner mbB**
**Vogelweidstraße 8**
**60596 Frankfurt am Main (DE)**

(56) Entgegenhaltungen:

| | |
|---|---|
| EP-A1- 1 500 857 | WO-A1-2009/013205 |
| DE-A1- 19 723 650 | DE-A1-102005 004 477 |
| DE-A1-102011 052 901 | DE-B3-102018 103 324 |
| US-A1- 2017 335 992 | US-A1- 2018 112 798 |

## Beschreibung

Gebiet der Erfindung

Stellventile oder -armaturen bestehen aus einem Antrieb und einem beweglichen Ventilglied. Sie dienen zum Regulieren eines Fluidstromes. Die Antriebsstange des Ventilglieds wird in der Regel durch ein fluiddichtes Gehäuse oder einen Deckel des Ventils nach außen geführt. Eine Dichtung (z.B. Packung) dichtet die Antriebsstange zum Ventil-Gehäuse-Deckel hin nach außen ab. Außerhalb befindet sich ein Antrieb, welcher auf die Antriebsstange wirkt und das Ventilglied bewegt. Als Antrieb zum Bewegen der Antriebsstange dienen typischerweise fluidische Antriebe (in der Regel pneumatische). Die Art der Ventile können sowohl Drehventile als auch Hubventile sein.

Beim Bewegen des Ventilglieds mittels des Antriebs treten verschiedene Haft- und Gleitreibungen auf. Die Ursachen für die Reibung können sein:

- die Dichtung, zwischen der Antriebsstange und dem Ventil-Gehäuse-Deckel,
- Reibung zwischen der Antriebsstange und der Antriebsgehäuse-Abdichtung,
- bei Drehventilen: Reibung des Drehelementes an den Dichtlippen,
- bei Hubventilen: Reibung z.B. der Gleitschieber an den Dichtlippen,
- Verkrustungen durch Korrosion oder Partikel im Fluid.

Auf/Zu-Stellarmaturen neigen dazu zu verkleben, wenn das Ventilglied lange in einer Stellung verbleibt oder gehalten wird. Die erhöhte Haftreibung verlangt dem Antrieb dabei oft große Kräfte ab. Bei pneumatischen Antrieben wird ein entsprechend höherer Druck benötigt, um das Ventilglied gegen die Haftreibung loszureißen bzw. loszubrechen. In der Hub-Druck-Kurve der Armatur ist ein erhöhter Anstieg bzw. Abfall des Drucks zu sehen, bis eine Wegänderung detektiert werden kann.

Im Bereich sicherheitsrelevanter Armaturen bzw. Sicherheitsventile werden in der Regel einfachwirkende Pneumatikantriebe verwendet. Die von Federkräften einseitig vorgespannten Antriebe verfahren eigenständig in eine sichere Position bzw. Sicherheitsstellung, wenn der Antrieb entlüftet wird, also die Druckluft aus der Kammer des Antriebes entweicht. Dies geschieht z.B. dann, wenn ein Strom-Druck(I/P)-Wandler oder ein Magnetventil nicht mehr bestromt wird.

Bei Sicherheitsventilen ist das Ventil im normalen Betrieb häufig offen, und im Fehlerfall (z.B. Stromausfall) schließt das Ventil selbsttätig. Die Druckluft wirkt immer gegen die Federkraft, mit der der Antrieb vorgespannt wurde. Entlüftet man nun den Antrieb, beginnt das Ventil sich zu schließen, sobald die Federkräfte das Ventilglied gegen die ggf. vorhandene Haftreibung losgerissen haben.

Die Sicherheitsstellung kann natürlich auch stromlos offen sein (Antrieb entlüftet) und bestromt geschlossen (Antrieb belüftet).

Stand der Technik

Um den sicheren Betrieb eines Sicherheitsventils bzw. einer Sicherheitsarmatur zu gewährleisten, wird in vielen Fällen nach einer gewissen Zeit (z.B. zyklisch bzw. in festen Zeitintervallen) getestet, ob sich das Ventil- oder Stellglied vollständig in die Sicherheitsstellung bewegen lässt. Ein derartiger Vollhubtest weist die Funktionsfähigkeit eines Sicherheitsventils in vollem Umfang nach. Er erfordert jedoch in vielen Fällen eine Unterbrechung des laufenden Betriebs einer Anlage und ist in der Regel mit hohem Aufwand und Kosten verbunden.

Um im laufenden Betrieb ohne eine Unterbrechung der Arbeitsprozesse die Funktionsfähigkeit eines Sicherheitsventils überprüfen zu können, wurde der sogenannte Partial-Stroke-Test (PST) oder Teilhubtest entwickelt (siehe z.B. die Offenlegungsschriften DE 197 23 650 A1 oder WO 2009/013205 A1 oder die Patentschrift DE 10 2018 103 324 B3). Das Stellglied wird dabei nur soweit verfahren, dass das Stellglied einen Teil der Strecke bis hin zur Sicherheitsstellung (je nach Anwendung eine Schließ- oder Offenstellung) verfährt, ohne den Prozess der Anlage maßgeblich zu beeinflussen oder zu stören.

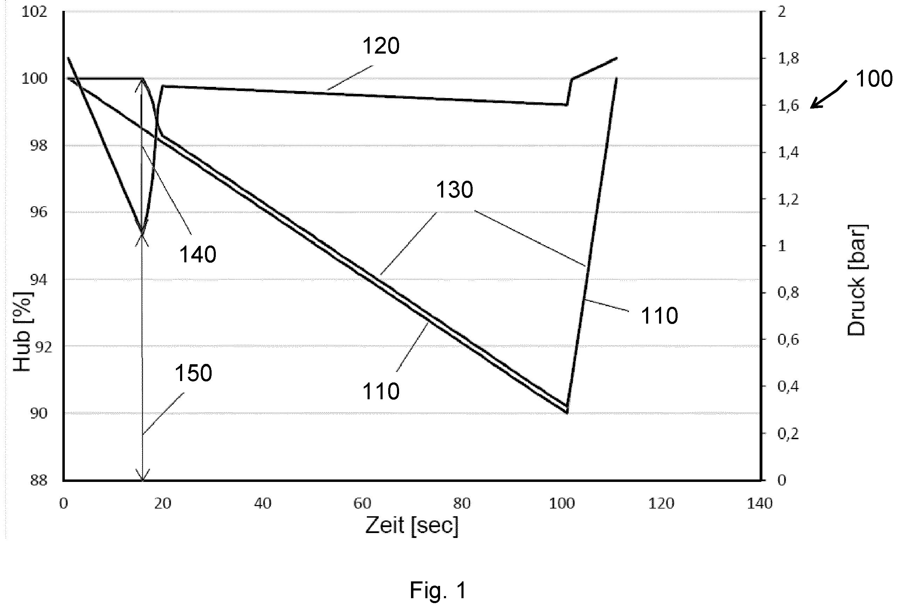

Der typische Verlauf eines Teilhubtests kann anhand von Fig. 1 verstanden werden. Dort sind der relative Hub des Ventilglieds und der Druck über der Zeit während eines Teilhubtests an einem Sicherheitsventil dargestellt. Das Sicherheitsventil hat einen einfachwirkenden, pneumatischen Antrieb mit Federrückstellung. Die Sicherheitsstellung ist stromlos geschlossen. Der Sollwert 110 zeigt den idealen reibungsfreien Hubverlauf beim Schließen des Ventils beim gleichmäßigen Entlüften. Der Druck wird reduziert und die Federkräfte des Antriebs werden freigesetzt und bewegen das Ventilglied in Richtung der Schließstellung. Der Ist-Druckverlauf 120 zeigt zunächst ein deutliches Absenken des Drucks, bevor sich der Hub (Ist-Hub) 130 verändert. Hier zeigt sich das Losbrechen des Ventilglieds aus seiner geöffneten Stellung, in der es evtl. bereits verklebt war, also der Haftreibung unterlag. Die Differenz zwischen dem anfänglichen, maximalen Druck und dem Druck im Moment des Losbrechens, wird als Losbrechdruck 140 bezeichnet. Der Losbrechdruck ist der Druck bzw. die Kraft, die ausreicht, um die Haftreibung zu überwinden und das Ventil zu lösen. Der Druck im Antriebsfluid im Moment des Losbrechens verbleibt als Reserve 150, sofern er größer 0 bar ist. Falls nicht, kann das Sicherheitsventil seine Funktion nicht mehr erfüllen. Der Druck wird nach dem Losbrechen nachgeregelt, also wieder erhöht, damit ein Überschwingen vermieden oder reduziert wird. Nach dem Überwinden der Haftreibung und der beschleunigten Hubbewegung findet ein gleichmäßiges Entlüften des Antriebs statt (langsame Druckreduktion), bis 90% des Hubs erreicht ist. Die Ist-Hub-Kurve 130 verläuft im Bereich der Gleitreibung etwa linear und parallel der Soll-Hub-Kurve 110, um den Betrag der Gleitreibung parallel verschoben. Nach Erreichen der 90% wird der Druck im Antrieb wieder erhöht, damit das Ventilglied gegen die Federkräfte wieder voll öffnet. Der Teilhubtest ist abgeschlossen.

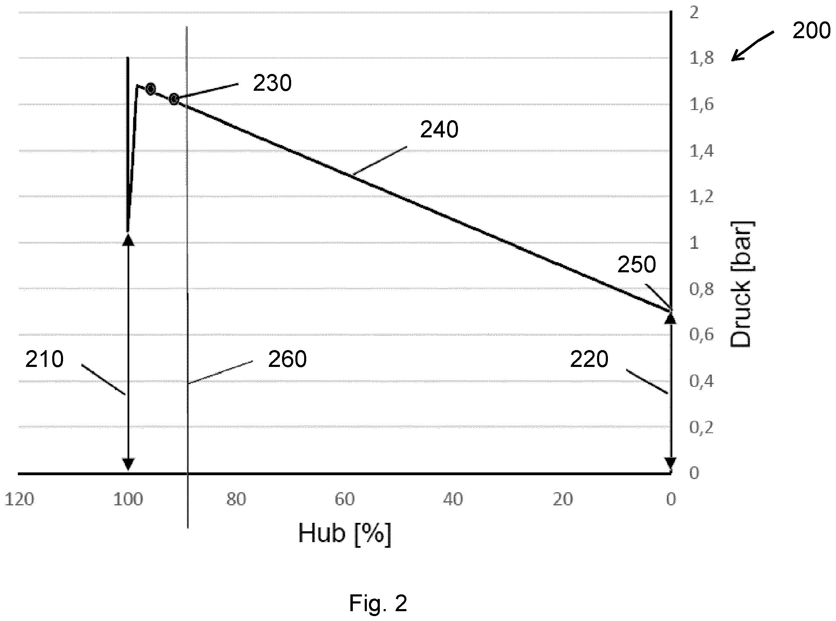

Durch Elimination der Zeit und Auftragen des Drucks 120 über dem Hub 130 entsteht die Hub-Druck-Kurve der Fig. 2. Die Schließdruck-Reserve 220 ist die Druckreserve, die verbleibt, nachdem das Sicherheitsventil geschlossen wurde. Die Schließdruck-Reserve 220, die sich bei gleichbleibender Bewegung einstellt (Gleitreibung), kann anhand von Fig. 2 ermittelt werden. Hierfür wird die Hub-Druck-Kurve gemäß Fig. 2 weiter bis zur Schließstellung (Hub = 0) extrapoliert.

Teilhubtests können im laufenden Betrieb durchgeführt werden. Sie erlauben Rückschlüsse auf die grundlegende Bewegbarkeit des Stellglieds, zumindest im Rahmen der ausgeführten Hubbewegung des Ventilglieds. Sie müssen jedoch so ausgelegt werden, dass sie den laufenden Betrieb unter keinen Umständen maßgeblich stören. Außerdem ist die Aussagekraft durch den ausgeführten Hubweg begrenzt. Teilhubtests stellen deshalb keinen vollständigen Ersatz für Vollhubtests dar, so dass weiterhin in gewissen Abständen eine Unterbrechung des laufenden Betriebs zur Überprüfung der vollen Funktionsfähigkeit von Sicherheitsventilen von Nöten sein kann.

Teilhubtests bergen zudem die Gefahr eines Überschwingens durch die in der Regel anfangs auftretende Haftreibung aufgrund von Verkrustungen oder Korrosion des Ventilglieds über den für einen Teilhubtest vorgesehenen Hubbereich hinaus. Um ein derartiges Überschwingen und die damit einhergehenden negativen Einflüsse auf den laufenden Betrieb einer Anlage zu vermeiden, kann bei einem pneumatisch betriebenen Sicherheitsventil der Druck der Druckluft nach dem Losreißen bzw. Losbrechen des Ventilglieds wieder erhöht werden. Ein gleichmäßiges Weiterbewegen in Richtung der Sicherheitsstellung wird erreicht, wenn der Druck der Druckluft anschließend wieder kontrolliert reduziert wird, d.h. der Antrieb langsam entlüftet wird. Nachdem das Stellglied einen Teil des Hubwegs zur Sicherheitsstellung hin bewegt wurde, wird es wieder zurück in die Ausgangsposition gebracht. Ein derartiges Verfahren wird in der Offenlegungsschrift DE 10 2011 052 901 A1 beschrieben. Andere Verfahren zur Vermeidung eines Überschwingens des Ventilglieds bei einem Teilhubtest finden sich z.B. in der Offenlegungsschrift DE 10 2005 004 477 A1, in der ein mechanischer Anschlag genutzt wird, und der EP 1 500 857 A1, die für diese Zwecke einen elektronischen Anschlag vorsieht.

Partial-Stroke-Testverfahren oder Teilhubtests werden üblicherweise im Rahmen eines relativ geringen Hubbereichs durchgeführt, der ca. 5 bis 15% des Hubwegs zur Sicherheitsstellung hin umfasst, je nach Vorgabe des Anwenders. Dies reicht in der Regel aus, um die grundsätzliche Beweglichkeit des Ventilglieds nachzuweisen und die häufigsten Fehlfunktionen eines Sicherheitsventils auszuschließen. Nachteilig ist allerdings, dass keine Aussage darüber getroffen werden kann, ob das Stellglied mit der verbleibenden Federkraft oder der Druckkraft der Druckluft im Antrieb weiter bis in die sichere Stellung verfahren würde. Dazu wird in der DE 10 2018 103 324 B3 vorgeschlagen, während eines Teilhubtests eine Hub-Druck-Kurve aufzunehmen. Anhand der Hub-Druck-Kurve kann z.B. die Druckreserve eines Antriebs ermittelt werden, die Aufschluss darüber gibt, ob das Ventil im Sicherheitsfall zuverlässig schließen würde.

Die Zuverlässigkeit derartiger Rückschlüsse ist durch den tatsächlich abgefahrenen Hubweg beschränkt. Hindernisse auf dem Teil des Wegs zur Sicherheitsstellung, der nicht abgefahren wurde, bleiben in der Regel unberücksichtigt. Betreiber von Anlagen mit Sicherheitsventilen müssen deshalb weiterhin zumindest in gewissen zeitlichen Abständen die volle Funktionsfähigkeit der Sicherheitsventile im Rahmen von Vollhubtests überprüfen.

Die Ausführung von Teilhubtests erfolgt entweder manuell oder automatisch, d.h. zeitbasiert. Manuelle Teilhubtests können während eines Stillstands, aber auch während eines laufenden Prozesses ausgeführt werden. Obwohl die Teilhubtests so eingestellt sind, dass sie einen laufenden Prozess möglichst nicht oder nur wenig stören, besteht dabei immer die Gefahr, dass der Teilhubtest in einem kritischen Stadium oder Zustand des Prozesses oder der Anlage gestartet wird. Es muss deshalb immer eine Entscheidung abhängig von der jeweiligen Situation getroffen werden. Manuelle Teilhubtests werden deshalb nicht ausgeführt, wenn Zweifel oder keine absolute Sicherheit darüber besteht, dass die Anlage sich nicht in einem solchen kritischen Stadium oder Zustand befindet. Ähnliches gilt für automatisierte Teilhubtests. Diese müssen in der Regel überwacht und in ungünstig erscheinenden Situationen manuell abgebrochen werden, oftmals bevor ein nennenswerter Hub erreicht wurde. Ein Verfahren zur Überprüfung eines Sicherheitsventils mit Hilfe eines ersten und eines zweiten Teilhubtests, jedoch ohne die von einem Messwert abhängige Bestimmung eines Zeitpunkts zur Durchführung des zweiten Teilhubtests ist aus US 2017/335992 A1 bekannt.

Aufgabe

Aufgabe der Erfindung ist es, eine sicherere und zuverlässigere Überprüfung der Funktionsfähigkeit eines Sicherheitsventils zu ermöglichen sowie die aus der Überprüfung ableitbaren Aussagen über die Funktionsfähigkeit eines Sicherheitsventils zu verbessern.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Überprüfen der Funktionsfähigkeit eines Sicherheitsventils vorgeschlagen, wobei das Sicherheitsventil ein Ventilglied und einen Stellungsregler zur Regelung der Position des Ventilglieds aufweist. Das Sicherheitsventil ist Teil einer Anlage, auf der ein Prozess mit einem Prozessmedium abläuft bzw. ablaufen kann. Die Anlage weist mindestens einen Sensor zum Überwachen des Zustands oder einer Eigenschaft der Anlage und/oder des Prozesses und/oder des Prozessmediums auf. Das Verfahren umfasst des Weiteren einen ersten und einen zweiten Teilhubtest zum Überprüfen der Funktionsfähigkeit des Sicherheitsventils, wobei für den ersten Teilhubtest ein erster Hub des Ventilglieds durch den Stellungsregler vorgegeben wird. Das Verfahren weist zudem folgende Schritte auf:

a) Mindestens ein Messwert mindestens eines der Sensoren wird erfasst.
b) Ausgehend von mindestens einem der Messwerte wird ein Zeitpunkt während des laufenden Prozesses bestimmt, an dem der zweite Teilhubtest durchgeführt werden kann, wobei der zweite Teilhubtest einen zweiten Hub des Ventilglieds durch den Stellungsregler aufweist, der größer ist als der vorgegebene erste Hub des ersten Teilhubtests und kleiner oder gleich dem Hub bei einem Vollhubtest. Des Weiteren ist der zweite Hub derart ausgelegt, dass der zweite Teilhubtest den Prozess höchstens in einem vorgesehenen bzw. vorgegebenen Maße stören kann.
c) Der zweite Teilhubtest wird zu dem bereits bestimmten Zeitpunkt durchgeführt.

Das Verfahren ist sowohl für Sicherheitsanwendungen eines Sicherheitsventils mit Auf/Zu-Betrieb als auch für Regelanwendungen mit entsprechenden Regelbzw. Stellventilen geeignet, insbesondere wenn das Ventilglied längere Zeit in einer Stellung gehalten wurde, d.h. das Ventilglied für längere Zeit nicht bewegt wurde. Der Begriff Sicherheitsventil ist im Rahmen dieser Anmeldung entsprechend breit zu verstehen. Dasselbe gilt für den Stellungsregler, der z.B. ein fluidisch oder elektrisch angetriebener Stellungsregler sein kann.

Die Ausführung des Teilhubtests oder PSTs erfolgt mithilfe des Stellungsreglers, der dazu das Ventilglied bewegt. Dabei wird die Bewegung des Ventilglieds durch den Stellungsregler allgemein als Hub bezeichnet. Ein Hub erfolgt in der Regel in Richtung der Federkräfte, mit denen der Antrieb des Sicherheitsventils vorgespannt wird. Der Stellungsregler kann dazu das Ventilglied anheben oder absenken, je nach Anwendungsfall. Ein Hub kann auch eine Drehbewegung eines Ventilglieds darstellen, wie z.B. bei einem Klappenventil oder Kugelhahn, oder eine Schubbewegung eines Ventilglieds oder Schiebers in einem Absperrschieber.

Zur Regelung der Position des Ventilglieds bzw. um das Ventilglied kontrolliert bewegen zu können, kann der Stellungsregler über einen Sensor verfügen oder mit einem Sensor gekoppelt sein, der Rückschlüsse auf die Position des Ventilglieds zulässt. Letzteres kann z.B. ein Drucksensor in einem fluidischen Antrieb sein, den der Stellungsregler steuert, um das Ventilglied zu bewegen, oder ein System aus einem Magnetsensor und einem magnetischen Codierstreifen oder Polring. Mit dem Sensor des Stellungsreglers sowie des mindestens einen Sensors der Anlage kann verfolgt werden, wie sich der Zustand oder die Eigenschaft der Anlage und/oder des Prozesses und/oder des Prozessmediums mit der Position des Ventilglieds verändert. Dies zeigt u.a. bzw. dem Fachmann ist klar, dass die Position des Ventilglieds des Ventils, dessen Funktionsfähigkeit überprüft werden soll, nicht dazu geeignet ist, den Zeitpunkt zur Durchführung des zweiten Teilhubtests zu bestimmen.

Der erste Teilhubtest des vorgeschlagenen Verfahrens stellt einen Teilhubtest gemäß dem Stand der Technik dar. Er ist so ausgelegt, dass er den laufenden Betrieb der Anlage bzw. den laufenden Prozess nicht maßgeblich beeinflusst oder stört, bestenfalls unabhängig vom Zustand der Anlage.

Um die oben dargestellten Beschränkungen derartiger Teilhubtests oder Partial-Stroke-Testverfahren zu überwinden, insbesondere den begrenzten Hub und die eingeschränkten, oftmals von Einzelentscheidungen abhängigen Startbedingungen, bietet das vorgeschlagene Verfahren die Möglichkeit, den zweiten Teilhubtest mit einem größeren Hub durchzuführen. Dies setzt jedoch voraus, dass ein Zeitpunkt abgepasst wird, bei dem dieser größere Hub den Betrieb der Anlage nicht über das vorgegebene Maß hinaus stört. Zu diesem Zweck wird die Anlage, der Prozess und/oder das Prozessmedium mit mindestens einem Sensor beobachtet, um einen Zeitpunkt zu identifizieren, bei dem der zweite Teilhubtest mit einem größeren Hub durchgeführt werden kann. Im günstigsten aller Fälle, kann dieser zweite Teilhubtest sogar mit einem vollen Ausschlag ausgeführt werden, zum Beispiel wenn das Prozessmedium in der Anlage zu einem bestimmten Zeitpunkt nicht fließt.

Das vorgeschlagene Verfahren ermöglicht es also, den zweiten Teilhubtest mit einem größeren Bewegungs- bzw. Hubbereich des Ventilglieds als bei dem ersten Teilhubtest durchzuführen, bis hin zu einem Vollhubtest. Damit können zuverlässigere Aussagen über die Funktionsfähigkeit der Armatur bzw. des Sicherheitsventils getroffen werden. Zudem können Verkrustungen entlang eines größeren Hubbereichs als bei dem ersten Teilhubtest erkannt bzw. vermieden werden.

Mithilfe des zweiten Teilhubtests kann Rücksicht auf den laufenden Betrieb der Anlage und damit verbundene Prozesse genommen werden. Im Gegensatz zum ersten Teilhubtest, bei dem der Hub des Ventilglieds fest vorgegeben ist, kann der Hub, der beim zweiten Teilhubtest ausgeführt wird, so ausgelegt bzw. gewählt werden, dass die mit dem Messwert zur Bestimmung des Zeitpunkts, an dem der zweite Teilhubtest durchgeführt werden kann, verbundene Eigenschaft des Prozessmediums, Prozesses und/oder der Anlage oder ein entsprechender Zustand sich höchstens in einem vorgesehenen bzw. vorgegebenen Maße ändern kann, z.B. einen Maximal- und/oder Minimalwert nicht über- bzw. unterschreitet. Der Hubbereich kann demnach an den laufenden Prozess angepasst werden.

Die Störung des Prozesses durch den Teilhubtest muss nicht in dem Maß erfolgen, das zur Bestimmung des Zeitpunkts vorgegeben wird, an dem der zweite Teilhubtest durchgeführt werden kann. Die tatsächliche Störung des Prozesses durch den zweiten Teilhubtest nimmt in der Regel ein kleineres Ausmaß an. Dies ist zum einen auf Sicherheitsabstände bzw. Puffer zurückzuführen, die in dem vorgegebenen Maß bzw. dem Hubbereich des zweiten Teilhubtests enthalten sein können. Zum anderen wird das vorgegebene Maß in der Regel anhand einer dauerhaften Störung des Prozesses bestimmt. Viele Prozesse reagieren zumindest in gewissen Zuständen oder Stadien auf eine lokal begrenzte Störung wie z.B. einen Teilhubtest jedoch mit einer gewissen Verzögerung bzw. Latenz. In diesen Fällen kann es unter Umständen vorkommen, dass der Test bereits abgeschlossen ist, bevor er den Prozess überhaupt stört. In der Regel fällt die Störung des Prozesses durch seine Trägheit bzw. Latenz geringer aus als bei der für die Bestimmung des vorgegebenen Maßes herangezogenen dauerhaften Störung.

Der Zeitpunkt für den zweiten Teilhubtest wird anhand von Informationen über den laufenden Prozess bestimmt. Er wird so bestimmt, dass das Ventilglied durch den Stellungsregler in einem größeren Hubbereich als beim ersten Teilhubtest verfahren werden kann. Dies ist z.B. der Fall, wenn die Anlage gerade stillsteht, umfasst aber auch weniger offensichtliche Situationen, z.B. Situationen, in denen der Füllstand eines Speichers, eines Tanks oder einer Leitung ein kurzes Schließen oder wenigstens teilweises Verschließen der Zuleitung zu dem Speicher oder Tank oder der Leitung erlaubt. Derartige Situationen treten z.B. bei Batch- oder Chargenprozessen auf. Weitere Anwendungsfälle stellen Fernwärmesysteme oder solarthermische Anlage dar, bei denen die Temperatur des Wärmetransportmittels in Zu- und Abläufen von Wärmeabnehmern mithilfe von Sensoren überwacht wird. Legen die gemessenen Temperaturen nahe, dass die Wärmezufuhr kurzfristig unterbrochen oder wenigstens eingeschränkt werden kann, kann in der Regel der zweite Teilhubtest gemäß dem vorgeschlagenen Verfahren durchgeführt werden. Ähnliches gilt für die Sauerstoffzufuhr für einen Hochofen, bei dem Temperaturmessungen ähnliche Schlüsse zulassen, oder für chemische Anlagen, bei denen die Zusammensetzung, Dichte oder der pH-Wert eines Prozessmediums oder Produkts anzeigt, dass eine Zuleitung zumindest für einen gewissen Zeitraum für den zweiten Teilhubtest zur Verfügung steht.

Der erste Teilhubtest wird nicht notwendigerweise zuerst ausgeführt. Er kann vor oder nach dem zweiten Teilhubtest ausgeführt werden. Hinzu kommt, dass der zweite Teilhubtest wiederholt durchgeführt werden kann, jeweils mit einem an die Situation angepassten Hub. Zudem kann durch die Berücksichtigung prozessrelevanter Größen ein Teilhubtest in der Regel häufiger durchgeführt werden. Das Ventilglied wird somit häufiger bewegt und verfahren. Verkrustungen, Korrosion und die damit einhergehende Reibung bzw. die damit einhergehenden Reibkräfte können auf diese Weise reduziert bzw. vermieden werden, wodurch sich die Verfügbarkeit und Funktionalität des Sicherheitsventils bzw. der Anlage verbessert bzw. die Ausfall- oder Versagenswahrscheinlichkeit reduziert. Darüber hinaus können Wartungsintervalle verlängert werden.

Um unnötige Tests bzw. die damit einhergehende Belastung des laufenden Betriebs bzw. des Sicherheitsventils zu vermeiden, kann ein Mindestzeitraum zwischen zwei Teilhubtests bzw. eine maximale Frequenz für die Teilhubtests vorgegeben werden. Der zweite Teilhubtest wird demnach erst wiederholt, nachdem ein angemessener Zeitraum vergangen und ein Test wieder sinnvoll ist.

Das vorgeschlagene Verfahren stellt einen Mittelweg zwischen einem manuellen und zeitbasierten (zyklischen) Ausführen von Teilhubtests dar. Es ist einerseits automatisiert, wird andererseits aber nur in Situationen durchgeführt, die das Ausführen eines Teilhubtests erlauben. Die Überprüfung der Funktionalität eines Sicherheitsventils hängt damit nicht mehr von Einzelentscheidungen bzw. einer individuellen Einschätzung der vorliegenden Situation ab. Zudem können gefährliche Situationen vermieden werden, die durch das Ausführen eines Teilhubtests in kritischen Zuständen des Prozesses oder der Anlage entstehen können.

Der zweite Teilhubtest kann sich vom ersten Teilhubtest nicht nur durch den Hubbereich unterscheiden, der durchfahren wird. Typischerweise wird der zweite Teilhubtest jedoch mit den gleichen Parametern bzw. unter denselben Rahmenbedingungen durchgeführt wie der erste Teilhubtest. Zum Beispiel kann der zweite Teilhubtest dieselben Maßnahmen zum Verhindern eines Überschwingens des Ventilglieds umfassen wie der erste Teilhubtest. Durch die Verwendung der gleichen Parameter bzw. Rahmenbedingungen (abgesehen von der Länge des Hubwegs bzw. der Größe des durchfahrenen Hubbereichs) können die Testergebnisse des ersten und des zweiten Teilhubtests miteinander verglichen werden. Zudem wird die Konfiguration des Sicherheitsventils bzw. des Stellungsreglers vereinfacht.

Die Parameter bzw. Rahmenbedingungen sind Konfigurations- und Abbrucheinstellungen des PST, die harte Grenzen beschreiben, in denen sich der PST bewegen darf. Sie setzen sich aus vorgegebenen (z.B. den Parametern eines ersten Teilhubtests) und prozesswertabhängigen Einstellungen (z.B. der Hubbereich im Rahmen des zweiten Teilhubtests) zusammen. Diese Einstellungen werden immer beachtet, so dass auch Tests, die zu unterschiedlichen Zeitpunkten durchgeführt werden, vergleichbare Ergebnisse liefern. Der Unterschied liegt in der Regel im durchfahrenen Hubbereich. Der Hubbereich des zweiten Teilhubtests kann zur besseren Vergleichbarkeit der Tests aber auch fest vorgegeben werden.

Die Parameter eines Teilhubtests umfassen beispielsweise die Stellung bzw. den Hub des Ventilglieds beim Start des PST (z.B. den Hub in der Endlagenstellung des Ventilglieds) bzw. den maximalen Hub des Ventilglieds, der während eines PSTs erreicht werden soll und in der Regel auch nicht überschritten werden darf. Darüber hinaus kann die Art und Weise, wie der Hubbereich durchfahren wird, eingestellt werden. Die Hubänderung im Rahmen eines Teilhubtests kann im Rahmen eines Sprungs oder einer sogenannten Rampe von einer Ausgangsstellung des Ventilglieds (in vielen Fällen eine Endlagenstellung) bis hin zu dem im Rahmen des Tests vorgesehenen maximalen Hubs des Ventilglieds erfolgen. Ein Sprung erfolgt dabei innerhalb einer Sekunde, während eine Rampe einen linearen Verlauf des Hubs des Ventilglieds darstellt, bei der der vorgesehene bzw. vorgegebene maximale Hub in mehr als einer Sekunde (bis hin zu beispielsweise 9999s) erreicht wird. Die entsprechende Geschwindigkeit bzw. das entsprechende Zeitintervall ist variabel einstellbar bzw. kann ebenfalls vorgegeben werden. Neben Parametern für den Hub bzw. die Stellung des Ventilglieds können ähnliche Parameter für den Druck des Fluidums angegeben werden, mit dem der Stellungsregler angetrieben wird. Die Frequenz mit der Teilhubtests durchgeführt werden bzw. die Zeit, die zwischen zwei Tests liegen soll, kann ebenfalls vorgegeben oder eingestellt werden.

Im Rahmen des zweiten Teilhubtests können weitere Parameter eingestellt werden. Dazu gehört der minimale Hub, der durch den Hub im Rahmen des ersten Teilhubtests immer vorgegeben ist. Im Rahmen des zweiten Teilhubtests muss das Ventilglied mindestens um den minimalen Hub bewegt werden. Kann dies nicht erfüllt werden, startet der Test erst gar nicht oder, wenn der Test bereits gestartet und vorzeitig abgebrochen wurde, gilt als nicht erfolgreich durchgeführt. Ein Test mit weniger Bewegung gibt keine Aussagekraft über den Zustand des Stellgerätes bzw. des Sicherheitsventils. Weitere Parameter bzw. Rahmenbedingungen umfassen den Zustand bzw. mindestens eine Eigenschaft der Anlage, des Prozesses und/oder Prozessmediums. So können z.B. durchfluss-, temperatur- oder druckabhängige Einstellungen vorgenommen werden. Eine hohe Temperatur oder ein hoher Druck des Prozessmediums kann z.B. ein kritisches Stadium des Prozesses anzeigen. Ein PST wird in diesem Fall nicht durchgeführt, obwohl z.B. der aktuell gemessene Durchflusswert einen PST zulassen würde.

Zusätzlich zu den Konfigurationseinstellungen können auch Abbruchkriterien definiert werden, um z.B. unvorhersehbare Ereignisse bzw. Störfälle abzusichern. Derartige Abbruchkriterien können sein die maximale Testdauer, nach der ein Test in jedem Fall abgebrochen wird, die Totzeit, nach der der Test abgebrochen wird, wenn sich das Ventilglied nicht bewegen lässt, oder untere bzw. obere Schranken bzw. Toleranzwerte bzw. -bänder für die Stellung des Ventilglieds und/oder des Drucks des Fluidums, mit dem der Stellungsregler angetrieben wird.

Der zweite Hub kann jeden Wert im Bereich zwischen dem ersten Hub und dem durch die maximale Störung des Prozesses festgelegten maximalen Hub annehmen. In der Regel wird der maximal zur Verfügung stehende Hubbereich genutzt, d.h. der zweite Hub wird derart ausgelegt, dass der zweite Teilhubtest den Prozess in dem vorgegebenen Maße stören kann. Auf diese Weise kann die Aussagekraft des zweiten Teilhubtests optimiert werden.

Durch die Ausnutzung des zur Verfügung stehenden Hubbereichs kann im Idealfall im Rahmen des zweiten Teilhubtests sogar ein Vollhub ausgeführt werden bzw. der komplette Hubbereich bis hin zur Sicherheitsstellung durchfahren werden, ohne die Anlage stilllegen zu müssen. Anlagenstillstände können auf diese Weise vermieden werden. Zudem können Vollhubtests in vielen Fällen häufiger durchgeführt werden und somit die Sicherheit der Anlage in einem höheren Maß gewährleistet werden. Stehen Vollhubtests nicht oder zumindest für einen längeren Zeitraum nicht zur Verfügung, erlaubt es das Verfahren, zumindest in der Regel einen größeren Hubbereich zu durchfahren bzw. zu testen. Dadurch kann in vielen Fällen die Notwendigkeit für einen Vollhubtest entfallen. Zumindest können die Zeiträume, in denen kein Vollhubtest durchgeführt werden muss, verlängert werden.

Der maximale Hubbereich kann z.B. aus der aktuellen Durchflussmenge $D_0$ eines Prozessmediums durch eine Leitung bei vollständig geöffnetem Ventil (Hub h = 0) und einem Sicherheitsabstand von x (x z.B. 1%, 2%, 3%, 5% oder 10% sein kann) bezogen auf einen vorgegebenen Wert der Durchflussmenge $D_{min}$, der eingehalten werden muss, berechnet werden. In einigen Fällen ist die Durchflussmenge D nahezu proportional zum Hub h. In solchen Fällen beträgt der maximal zur Verfügung stehende Hub $h_{max}$ für den zweiten Teilhubtest

$$h_{max} = 1 - ( D_{min} / D_0 ) ( 1 + x ) ,$$

wobei $h_{max} = 1$ einem Vollhub entspricht (in diesem Beispiel: vollständiges Schließen des Ventils). Der Zusammenhang gilt nur für $(1+x) D_{min} \leq D_0$. In vielen Fällen gibt es zwar keinen derartigen linearen und/oder eindeutigen Zusammenhang, dies kann in der Regel jedoch durch die Wahl eines genügend großen Sicherheitsabstandes x ausgeglichen werden. Andere Eigenschaften oder Zustände der Anlage, des Prozesses bzw. des Prozessmediums können in ähnlicher Weise zur Bestimmung des Zeitpunkts für den zweiten Teilhubtest herangezogen werden.

Mithilfe derartiger oder ähnlicher Überlegungen lassen sich Zeitpunkte bestimmen, zu denen der ausführbare Hub $h_{max}$ größer ist als der typischerweise für einen klassischen Teilhubtest gewählte Hub von beispielsweise 10%. Findet man einen maximalen Hub $h_{max}$, der größer ist als der vorgegebene erste, klassische Hub bei dem ersten Teilhubtest, hat man einen Zeitpunkt gefunden, zudem der zweite Teilhubtest durchgeführt werden kann. Im vorliegenden Beispiel wäre der Messwert, der erfasst wird, um einen geeigneten Zeitpunkt für den zweiten Teilhubtest zu bestimmen, die Durchflussmenge $D_0$. Liegt die aktuelle Durchflussmenge ausreichend über der minimal aufrecht zu erhalten Durchflussmenge, kann ein zweiter Teilhubtest mit einem größeren Hub durchgeführt werden.

Auf Basis derartiger Rückschlüsse, Modellierungen bzw. Überlegungen kann der zweite Teilhubtest innerhalb definierter Rahmenbedingungen (s.o.) automatisch im optimalen Bereich durchgeführt werden. Der optimale Bereich definiert sich aus mehreren Kriterien:

1. Das Ventil führt einen möglichst großen Hub aus, damit möglichst der komplette Hubbereich auf seine korrekte Funktionsfähigkeit hin überprüft werden kann.
2. Der Prozess wird gering bis gar nicht gestört, wobei eine geringe Störung mindestens in dem Rahmen erlaubt ist, der auch für einen klassisch eingestellten Teilhubtest, d.h. für einen ersten Teilhubtest, gilt.
3. Die Rahmenbedingungen werden beachtet.

Mit den oben skizzierten Überlegungen bzw. Berechnungen kann die Wirkung des zweiten Teilhubtests auf den laufenden Prozess vorhergesagt bzw. abgeschätzt werden. Ein Teilhubtest kann in vielen Fällen auf Grundlage solcher Überlegungen ohne weitere Maßnahmen durchgeführt werden. Dies gilt insbesondere für Fälle und Anwendungen, bei denen sich die Eigenschaften oder der Zustand der Anlage, des Prozesses oder des Prozessmediums auf Zeitskalen ändern, die wesentlich größer sind als die Zeitskala zur Durchführung des zweiten Teilhubtests. Diese Skalen können sich jedoch im laufenden Betrieb ändern. So kann der Zulauf oder die Zuleitung eines gefüllten Speichers oder Tanks in vielen Fällen für die Dauer des zweiten Teilhubtests geschlossen werden, während dies bei einem Speicher oder Tank, der gerade leer läuft oder leer gelaufen ist, nicht der Fall ist. Ähnliches gilt für den ersten Teilhubtest, der zwar so ausgelegt ist, dass er den laufenden Prozess nicht maßgeblich stört oder beeinflusst, aber in ungünstigen Situationen dennoch zu unvorhergesehenen Störungen führen kann. In vielen Fällen ist es deshalb sinnvoll, bei der Durchführung des ersten oder zweiten Teilhubtests mithilfe mindestens eines der Sensoren zu überwachen, ob der Prozess höchstens in dem vorgesehenen bzw. vorgegebenen Maße gestört wird. Ist das nicht der Fall, kann der Test automatisch oder manuell (aufgrund einer Fehlermeldung des Systems) abgebrochen werden. Dies erhöht nicht nur die Sicherheit der Anlage bzw. des Prozesses bei der Durchführung des Tests. Es erlaubt auch die Durchführung des ersten oder zweiten Teilhubtests in weniger klaren Ausgangssituationen. Damit können die Tests in der Regel häufiger durchgeführt werden.

Eine Kopplung von Prozessmesswerten an einen Partial-Stroke-Test mit variablem Hub ermöglicht es zudem den optimalen bzw. maximal möglichen Hub während der Testdurchführung zu ermitteln. Dabei kann der Hubbereich des zweiten Teilhubtests mithilfe der Sensorik dynamisch an den laufenden Prozess angepasst werden, um so einen möglichst großen Hubbereich durchfahren zu können. Auf diese Weise werden Modelle und Schätzungen bezüglich der Auswirkung des zweiten Teilhubtests auf das Prozessmedium, den Prozess bzw. die Anlage lediglich zur Bestimmung des Zeitpunkts zur Durchführung genutzt. Die tatsächliche Durchführung des Tests kann sogar unabhängig von Modellen und Schätzungen erfolgen. Fehler aufgrund vereinfachender Betrachtungen (wie z.B. der Annahme eines linearen Zusammenhangs oder einer direkten Proportionalität) oder aufgrund unbekannter bzw. nicht erfasster Störeinflüsse können so vermieden werden.

Durch die Überwachung der Eigenschaft oder des Zustands der Anlage, des Prozesses oder des Prozessmediums kann auch ein Überschwingen des laufenden Prozesses verhindert werden. Ein derartiges Überschwingen kann z.B. aufgrund einer nichtlinearen Reaktion des Prozesses auf den Teilhubtest entstehen. Während Verfahren zum Verhindern eines Überschwingens des Ventilglieds aufgrund eines Anbackens oder Verkrustens im Stand der Technik beschrieben sind, um Beschädigungen am Ventil oder eine Störung des Prozesses oder der Anlage über das vorgegebene Maß hinaus zu verhindern, kann das vorgeschlagene Verfahren genutzt werden, um die Ausführung des Teilhubtests direkt mit der Reaktion des Prozesses zu verknüpfen und die Einhaltung des vorgegebenen Stör-Maßes zu überwachen. Der Test kann entsprechend gesteuert oder geregelt werden, d.h. z.B. langsamer oder mit entsprechenden Gegensteuermaßnahmen durchgeführt werden. Teilhubtests (erste und/oder zweite) können auf diese Weise sicherer und damit in der Regel auch häufiger durchgeführt werden.

Des Weiteren können Informationen anderer Sensoren (die nicht notwendigerweise den Zustand der Anlage, des Prozesses oder des Prozessmediums überwachen, wie z.B. Positions- oder Drehmomentsensoren) bzw. Informationen über Stellungsregler oder Ventile einbezogen werden. Dabei kann das Verfahren so ausgeführt werden, dass ein vorgegebener maximaler Hub oder ein Losbrechmoment nicht überschritten wird.

Durch die Überwachung des Prozesses mithilfe eines der Sensoren und die damit mögliche dynamische Anpassung des Hubbereichs kann in der Regel ausgeschlossen werden, dass der Prozess über das vorgesehene bzw. vorgegebene Maß hinaus gestört wird. Es gibt jedoch Situationen, in denen der Prozess stärker als vorgesehen gestört wird. Derartige Situationen können durch Rückkopplungseffekte oder spontan bzw. unvorhergesehen auftretende Störeinflüsse entstehen (z.B. durch einen Stromausfall). In diesen Fällen kann der erste oder zweite Teilhubtest (automatisch) abgebrochen werden, wenn mithilfe mindestens eines der Sensoren erkannt wird, dass der Prozess mehr als in dem vorgegebenen Maße gestört wird. Auf diese Weise kann der laufende Betrieb auch in solchen Situationen aufrechterhalten werden.

Zu diesem Zweck können Abbruchkriterien definiert werden, um z.B. eine zu starke Beeinflussung des Mediums, des Prozesses und/oder der Anlage zu verhindern. Auch in diesen Fällen können entsprechende obere oder untere Schranken bzw. Toleranzwerte bzw. -bänder für den Zustand bzw. die Eigenschaft der Anlage, des Prozesses und/oder des Prozessmediums, der bzw. die von dem mindestens einen Sensor überwacht wird, festgelegt werden. So muss in der Regel ein Sicherheitsabstand beispielsweise zu einem vorgegebenen Mindestdurchflusswert oder Mindestdruck eingehalten werden.

Im Anschluss an einen Abbruch kann eine Meldung erzeugt werden, die angibt, dass ein Abbruchkriterium erfüllt bzw. der erste oder der zweite Teilhubtest abgebrochen wurde. Die Meldung kann weitere Details umfassen, z.B. die Gründe für den Abbruch, den mindestens einen Messwert mindestens eines der Sensoren bzw. die gemessene Störung, den Hub, der bis zum Abbruch erreicht wurde, bzw. unter welchen Rahmenbedingungen der Abbruch erfolgte. Dies gilt insbesondere für Fälle, bei denen ein minimaler Hub, z.B. der erste Hub, nicht erreicht werden konnte. In diesen Fällen gilt der Teilhubtest nicht nur als abgebrochen, sondern auch als nicht erfolgt bzw. nicht bestanden.

Kann ein Teilhubtest für einen längeren Zeitraum nicht durchgeführt werden und die Funktionsfähigkeit der Sicherheitsventile nicht überprüft werden, kann ebenfalls eine Meldung erzeugt werden, die den Betreiber der Anlage darüber informiert. Der Betreiber kann dann entsprechende Maßnahmen ergreifen.

Neben dem Zustand oder der Eigenschaft der Anlage, des Prozesses und/oder des Prozessmediums kann auch der Stellungsregler selbst überwacht werden. Er kann zum Beispiel so konfiguriert werden, dass ein vorgegebener maximaler Hub oder die Kraft, mit der das Ventilglied bewegt wird (z.B. das maximal aufgewendete Drehmoment bei Drehventilen), nicht überschritten wird.

Das Verfahren basiert auf mindestens einem Messwert, der von mindestens einem Sensor erfasst wird. Der mindestens eine Messwert kann eine Durchflussmenge und/oder Durchflussgeschwindigkeit, einen Füllstand, eine Temperatur, einen Druck, eine Dichte, einen pH-Wert und/oder eine Stellung und/oder Position darstellen. Die Stellung und/oder Position kann z.B. die Stellung eines Reglers oder eines Ventilglieds z.B. in einem Stellventil der Anlage sein. Die Durchflussmenge kann sich auf die Durchflussmenge des Prozessmediums beziehen, aber auch Kühlmittel und andere Flüssigkeiten der Anlage umfassen. Ähnliches gilt für die gemessene Temperatur oder Dichte, den gemessenen Druck, pH-Wert oder Füllstand.

Mithilfe von Prozesssensoren (Durchflusssensoren, Differenzdrucksensoren, Temperatursensoren, etc.) ist es möglich Rückschlüsse auf den Zustand oder eine Eigenschaft des Prozesses zu ziehen. Dies gilt sowohl für den Zustand oder eine Eigenschaft der gesamten Anlage als auch für den Zustand oder eine Eigenschaft des Prozesses oder des Prozessmediums in der Nähe oder innerhalb der Sicherheitsventile. Die Prozesssensoren können dabei direkt mit dem Stellungsregler des Sicherheitsventils verknüpft werden. Die Sensoren können bereits in der Anlage vorhanden oder verfügbar sein oder werden speziell zur Durchführung des vorgeschlagenen Verfahrens installiert.

Der aus dem mindestens einen Messwert ableitbare Zustand bzw. die aus dem mindestens einen Messwert ableitbare Eigenschaft beschreiben beispielsweise die Menge an Medium, die sich im Ventil bzw. im Zulauf davor und/oder im Ablauf danach befindet, und/oder die Geschwindigkeit, Temperatur, Dichte, Druck oder den pH-Wert des Mediums. Betrachtet man den somit ermittelten Zustand oder die somit ermittelte Eigenschaft, kann festgestellt werden, ob das Ventil im Rahmen eines Teilhubtests verfahren werden kann, ohne den Prozess über das vorgesehene bzw. vorgegebene Maß hinaus zu stören.

Der zugehörige Sensor wird in der Regel im Zu- oder Ablauf oder innerhalb des Sicherheitsventils platziert. Er überwacht dort den Zustand oder eine Eigenschaft der Anlage und/oder des Prozesses und/oder des Prozessmediums. Er kann sich aber auch in einem anderen Teil der Anlage befinden. Ein Sensor, der sich innerhalb oder in der Nähe des Sicherheitsventils befindet, lässt in vielen Fällen zuverlässigere Aussagen darüber zu, in welchem Maße ein Teilhubtest des Sicherheitsventils die Anlage, den Prozess bzw. das Prozessmedium beeinflusst. Zudem kann die Änderung des Zustands oder der Eigenschaft, die vom Sensor gemessen bzw. überwacht wird, schneller erfasst werden.

Viele Anlagen weisen doppelte bzw. redundante Strukturen auf, um die Kapazität bzw. Betriebssicherheit der Anlage zu erhöhen. Eine Anlage mit einem Sicherheitsventil kann demnach ein weiteres Sicherheitsventil mit einem Zu- und einem Ablauf aufweisen, das oft in einer vergleichbaren Position der Anlage, z.B. in einer parallelen Leitung, installiert ist und dort dieselbe oder zumindest eine ähnliche Funktion hat. Mindestens einer der Sensoren zur Überwachung des Zustands oder einer Eigenschaft der Anlage und/oder des Prozesses und/oder des Prozessmediums kann im Zu- oder Ablauf oder innerhalb des weiteren Sicherheitsventils platziert werden. In derartigen Fällen bietet sich der zweite Teilhubtest immer dann an, wenn der Sensor bzw. ein vom Sensor erfasster Messwert anzeigt, dass die zusätzliche Struktur innerhalb normaler Parameter funktioniert bzw. betrieben wird. Doppelte bzw. redundante Strukturen können auf diese Weise genutzt werden, um die Überprüfung der Funktionsfähigkeit eines Sicherheitsventils abzusichern.

Weitere Sensoren können ergänzende Informationen liefern, wobei ein Sensor als Primärsensor festgelegt bzw. definiert werden kann. Ein Teilhubtest kann auf die Werte des Primärsensors eingestellt werden, d.h. z.B. dass ein Abbruchkriterium an die Messwerte des Primärsensors gekoppelt wird. Die restlichen Sensoren können dazu verwendet werden, um Vorhersagen über die durch den Test zu erwartende Störung des Prozesses zu treffen bzw. in welchen Bereichen der Zustand oder die Eigenschaft der Anlage, des Prozesses und/oder des Prozessmediums um die zu erwartende Störung schwanken könnte.

Die Sicherheit (bezogen auf die Störung des Prozesses) erfindungsgemäßer Tests kann durch eine Vernetzung verschiedener Sensoren bzw. Stellungsregler, entweder untereinander oder durch ein übergeordnetes Leitsystem, erhöht werden. So können aktuelle Prozesszustände oder Ventilstellungen ausgetauscht werden. Wird dabei der Einbaustandort bzw. die Position der Sicherheitsventile innerhalb der Anlage berücksichtigt, können Schwankungen in den Rohrleitungen frühzeitig erkannt und beim Starten eines Teilhubtests berücksichtigt werden. Im Notfall könnte ein Teilhubtest auch abgebrochen werden. Dies gilt auch für Situationen, in denen sich der Prozess in einer unerwarteten Weise entwickelt.

Der Zeitpunkt, zu dem der zweite Teilhubtest durchgeführt werden kann, kann aktiv oder passiv bestimmt werden. Eine passive Bestimmung nimmt keinen Einfluss auf den laufenden Prozess bzw. den Zustand der Anlage, sondern überwacht mithilfe des mindestens einen Sensors, ob anhand des Zustands und/oder der Eigenschaft der Anlage, des Prozesses und/oder Prozessmediums der zweite Teilhubtest durchgeführt werden kann. Bei einer aktiven Bestimmung wird die Anlage so gesteuert, dass der zweite Teilhubtest zu einem vorgegebenen Zeitpunkt durchgeführt werden kann.

Eine aktive Bestimmung kann zum Beispiel mithilfe doppelter oder redundanter Strukturen erfolgen, die zu dem vorgegebenen Zeitpunkt, an dem der zweite Teilhubtest durchgeführt wird, bis zum Ende des Tests so geschaltet werden können, dass eine Störung durch den Test eines der Sicherheitsventile durch das andere Sicherheitsventil kompensiert werden kann. Dafür kann es unter Umständen ausreichend sein, dass die gedoppelte oder redundante Struktur für die Dauer des Tests nicht für einen Teilhubtest zur Verfügung steht bzw. entsprechend geschaltet bzw. blockiert wird.

Durch eine aktive Bestimmung kann das Überprüfen der Funktionsfähigkeit des Sicherheitsventils vom Betrieb bzw. Zustand der Anlage oder der Art des laufenden Prozesses entkoppelt und aktiv gesteuert werden. Die Überprüfung kann somit z.B. in vorgegebenen Intervallen oder anhand von Wartungs- bzw. Zeitplänen erfolgen.

In vielen Fällen ist es sinnvoll, die Häufigkeit der Ausführung von Teilhubtests zu überwachen. Wird z.B. innerhalb eines vorgegebenen Zeitraums kein Teilhubtest durchgeführt, kann im Rahmen des Verfahrens eine Fehler- oder Warnmeldung gesetzt bzw. ausgegeben werden.

Der vorgegebene Zeitraum kann je nach Anwendungsfall einen Tag, eine Woche, einen Monat, zwei Monate oder ein Jahr betragen. Die entsprechende Fehler- oder Warnmeldung kann Informationen über die von dem mindestens einen Sensor erfassten Messwerte bzw. die Stellung des Ventilglieds enthalten. Sie kann auch Aufschluss darüber geben, ob ein Zeitpunkt, an dem der zweite Teilhubtest durchgeführt werden kann, überhaupt bestimmt werden konnte. Der Anwender hat damit die Möglichkeit zu analysieren, aus welchen Gründen ein Teilhubtest nicht durchgeführt werden konnte, und kann entsprechende Gegenmaßnahmen einleiten.

Die Überwachung kann mithilfe von Aufzeichnungen erfolgen, ob und/oder zu welchen Zeitpunkten Teilhubtests durchgeführt wurden und unter welchen Bedingungen. Derartige Aufzeichnungen können auch unabhängig von einer Überwachung oder der Ausgabe von Fehlermeldungen erfolgen. Sie ermöglichen es dem Anwender, Nachweise über die Prüfung der Funktionsfähigkeit des Sicherheitsventils zu führen oder drohende Fehlfunktionen frühzeitig zu erkennen und entsprechende Gegenmaßnahmen einzuleiten.

Ein erfindungsgemäßes Verfahren kann zudem folgende Schritte umfassen. Zunächst wird nicht nur der Zeitpunkt bestimmt, an dem der zweite Teilhubtest durchgeführt werden kann, sondern noch weitere Startbedingungen für den zweiten Teilhubtest und mindestens ein Abbruchkriterium vorgegeben. Die weiteren Startbedingungen werden geprüft, bevor der zweite Teilhubtest durchgeführt wird. Sind die weiteren Startbedingungen nicht erfüllt, wird der zweite Teilhubtest nicht durchgeführt und die Bestimmung des Zeitpunkts, an dem der zweite Teilhubtest durchgeführt werden kann, und die Prüfung der weiteren Startbedingungen wiederholt. Wurde ein Zeitpunkt bestimmt, an dem der zweite Teilhubtest durchgeführt werden kann, und sind die weiteren Startbedingungen erfüllt, wird der zweite Teilhubtest zu dem bestimmten Zeitpunkt gestartet. Während des zweiten Teilhubtests wird die Bewegung des Ventilglieds und der Zustand oder die Eigenschaft der Anlage und/oder des Prozesses und/oder des Prozessmediums kontinuierlich überwacht. Der zweite Teilhubtest wird abgebrochen, sobald mindestens eines der Abbruchkriterien erfüllt ist. Der Test wird als erfolgreicher zweiter Teilhubtest registriert, wenn das Ventilglied einen Hub erreicht hat, der größer als der erste Hub ist, und als erfolgreicher erster Teilhubtest, wenn das Ventilglied einen Hub erreicht hat, der gleich dem ersten Hub ist. Der Test wird als nicht erfolgreich eingestuft, wenn das Ventilglied einen Hub erreicht hat, der kleiner als der erste Hub ist. Das Verfahren wird nun von neuem durchlaufen bzw. mit dem Prüfen der weiteren Startbedingungen fortgesetzt.

Die weiteren Startbedingungen können z.B. die Prüfung der für das Verfahren notwendigen Anschlüsse und Verknüpfungen umfassen. Dazu gehört die Prüfung der weiteren Startbedingung, dass der mindestens eine Sensor, z.B. ein Durchfluss- oder Differenzdrucksensor, mit dem Stellungsregler verknüpft bzw. verbunden ist oder wenigstens den mindestens einen Messwert an den Stellungsregler übertragen kann, sei es direkt oder indirekt über eine Datenverarbeitungseinrichtung. Des Weiteren kann überprüft werden, ob der zweite Teilhubtest z.B. aufgrund einer vorgegebenen maximalen Frequenz zur Durchführung von Tests überhaupt ausgeführt werden soll, d.h. es kann geprüft werden, ob genügend Zeit seit dem letzten Teilhubtest vergangen ist. Weiterhin kann geprüft werden, ob der erste bzw. minimale Hub erreicht werden kann, d.h. ob der erste Teilhubtest durchgeführt werden kann. Kann der erste Teilhubtest durchgeführt werden, nicht aber der zweite, wird der erste Teilhubtest durchgeführt.

Zudem können Aufzeichnungen bereits durchgeführter Teilhubtest analysiert und bewertet werden um sicherzustellen, dass alle getroffenen Einstellungen bzw. Vorgaben erfüllt werden können. Auf diese Weise können Informationen genutzt werden, die im Rahmen vergangener Tests gewonnen wurden. In diesem Zusammenhang ist z.B. das Losbrechmoment ein wichtiger Parameter. Es kann sich im Lauf der Zeit ändern (z.B. durch Korrosion) und im Rahmen eines Teilhubtests ermittelt werden. Wird das zuletzt ermittelte Losbrechmoment oder sogar Veränderungen desselben aufgezeichnet, kann ein Überschreiten des maximal zulässigen Hubs durch die Anwendung zu großer Kräfte beim Losbrechen des Ventilglieds verhindert werden. Ändert sich das Losbrechmoment, können zudem Rückschlüsse auf den Wartungsbedarf des Sicherheitsventils gezogen werden. Ist das zuletzt aufgezeichnete Losbrechmoment zu groß, kann ein Teilhubtest ggf. nicht mehr sicher ausgeführt werden. In diesem Fall führt die Überprüfung der weiteren Startbedingung "Losbrechmoment" dazu, dass ohne einen externen Eingriff bzw. Reset kein Teilhubtest mehr ausgeführt wird. Kann der Algorithmus über einen längeren, vom Anwender zu definierendem Zeitraum keine Durchführung gemäß der Konfiguration ausführen, wird der Anwender durch eine Meldung entsprechend informiert. Die genannten Startbedingungen sind auf alle erfindungsgemäßen Verfahren anwendbar. Das gleiche gilt für die oben genannten Abbruchkriterien.

Die Aufgabe wird zudem dadurch gelöst, dass bei einem erfindungsgemäßen Verfahren, wie es weiter oben beschrieben wurde, die Verfahrensschritte als Programmcode formuliert sind, mit dem das Verfahren auf mindestens einem Computer ablaufen kann.

Ferner wird die Aufgabe gelöst durch ein Computerprogramm, welches ausführbare Instruktionen beinhaltet, welche bei Ausführung auf einer Recheneinheit, einem Mikrocontroller, DSP, FPGA oder Computer oder auf einer Mehrzahl davon in einem Netzwerk das erfindungsgemäße Verfahren in einer seiner Ausgestaltungen ausführt.

Weiterhin wird die Aufgabe gelöst durch ein Computerprogramm mit Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Insbesondere können die Programmcode-Mittel auf einem computerlesbaren Datenträger gespeicherte Instruktionen sein.

Außerdem wird die Aufgabe gelöst durch einen Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk das erfindungsgemäße Verfahren in einer seiner Ausgestaltungen ausführen kann.

Auch wird die Aufgabe gelöst durch ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einer Recheneinheit, einem Mikrocontroller, DSP, FPGA oder Computer oder auf einer Mehrzahl davon in einem Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird die Aufgabe gelöst durch ein moduliertes Datenträgersignal, welches von einer Recheneinheit, einem Mikrocontroller, DSP, FPGA oder Computer oder von einer Mehrzahl davon in einem Netzwerk ausführbare Instruktionen zum Ausführen des erfindungsgemäßen Verfahrens in einer seiner Ausgestaltungen enthält.

Als Computersystem zum Ausführen des Verfahrens kommen sowohl ein einzelner Computer oder Mikrocontroller, DSPs oder FPGAs in Betracht, als auch ein Netzwerk von Mikrocontrollern, DSPs, FPGAs oder Rechnern, beispielsweise ein hausinternes, geschlossenes Netz, oder auch Rechner, die über das Internet miteinander verbunden sind. Ferner kann das Computersystem durch eine Client-Server-Konstellation realisiert sein, wobei Teile der Erfindung auf dem Server, andere auf einem Client ablaufen.

Ferner wird die Aufgabe gelöst durch einen Stellungsregler, der Teil eines Sicherheitsventils und derart ausgebildet ist, dass er die Funktionsfähigkeit des Sicherheitsventils mithilfe des erfindungsgemäßen Verfahrens in einer seiner Ausgestaltungen überprüfen kann.

Eine Lösung der Aufgabe stellt ebenso ein Sicherheitsventil dar, das derart ausgebildet ist, dass es das erfindungsgemäße Verfahren in einer seiner Ausgestaltungen ausführen kann.

Die Aufgabe wird zudem gelöst durch eine prozesstechnische Anlage mit einem Sicherheitsventil, wobei die Anlage derart ausgebildet ist, dass sie die Funktionsfähigkeit des Sicherheitsventils mithilfe des erfindungsgemäßen Verfahrens in einer seiner Ausgestaltungen überprüfen kann.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine Hub-Zeit- und die zugehörige Druck-Zeit-Kurve während eines Teilhubtests an einem typischen Sicherheitsventil;

Fig. 2    eine entsprechende Hub-Druck-Kurve;

Fig. 3    einen Abschnitt einer prozesstechnischen Anlage mit einem Sicherheitsventil und einem dem Ventil vorgelagerten Sensor;

Fig. 4    einen Abschnitt einer prozesstechnischen Anlage mit einem Sicherheitsventil und einem dem Ventil nachgelagerten Sensor;

Fig. 5    einen Abschnitt einer prozesstechnischen Anlage mit einem Sicherheitsventil, das einen integrierten Sensor aufweist;

Fig. 6    einen Abschnitt einer prozesstechnischen Anlage mit einem Sicherheitsventil, das zwei integrierte Sensoren aufweist;

Fig. 7    eine schematische Darstellung einer doppelten Struktur mit Sicherheitsventilen; und

Fig. 8    einen Ablaufplan eines erfindungsgemäßen Verfahrens zum Überprüfen der Funktionsfähigkeit eines Sicherheitsventils.

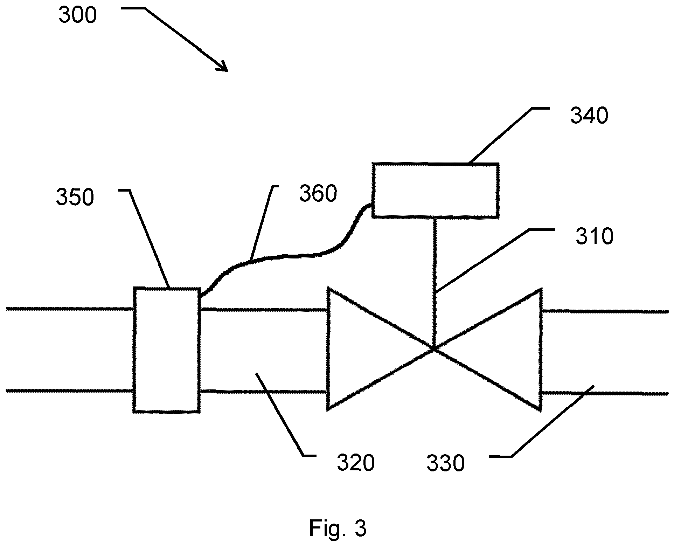

Fig. 3 zeigt einen Abschnitt 300 einer prozesstechnischen Anlage mit einem Sicherheitsventil 310. Im laufenden Betrieb der Anlage kann ein fluides Prozessmedium durch den Abschnitt 300 bzw. das Ventil 310 geleitet werden. Dazu verfügt das Ventil 310 über einen Zulauf 320 und einen Ablauf 330, wobei das Prozessmedium über den Zulauf 320 in das Sicherheitsventil 310 geleitet und über den Ablauf 330 wieder aus dem Sicherheitsventil 310 geführt wird. Der Durchfluss des Mediums wird mithilfe eines Ventilglieds (nicht explizit dargestellt) und eines Stellungsreglers 340 gesteuert, der zu diesem Zweck das Ventilglied bewegen kann. Im laufenden Betrieb befindet sich das Ventilglied in einer Stellung, die den Durchfluss des Prozessmediums durch das Ventil 310 möglichst bzw. nahezu nicht behindert. Im Störfall wird das Sicherheitsventil 310 mithilfe des Stellungsreglers 340 geschlossen, d.h. das Ventilglied wird vom Stellungsregler 340 in eine Schließstellung verfahren, so dass das Prozessmedium das Ventil 310 nicht mehr passieren kann.

Der Abschnitt 300 verfügt zudem über einen Sensor 350, der im Zulauf 320 des Ventils 310 angeordnet ist, d.h. der Sensor 350 ist dem Sicherheitsventil 310 vorgelagert. Der Sensor 350 ist in diesem Beispiel ein Durchflusssensor, der die Durchflussmenge des Prozessmediums anhand des Volumenstroms erfasst. Er übermittelt seine Messwerte über die Datenleitung 360 an den Stellungsregler 340.

Der Stellungsregler 340 ist so konfiguriert, dass er die Funktionsfähigkeit des Sicherheitsventils 310 überprüfen kann. Dazu kann er sowohl einen ersten als auch einen zweiten Teilhubtest durchführen. Der erste Test umfasst einen ersten Hub, der vorzugsweise 10% des Hubwegs von der Offen- bis hin zur Schließstellung des Ventils 310 beträgt und fest vom Anwender vorgegebenen wurde.

Der zweite Teilhubtest umfasst einen zweiten Hub, der mithilfe des Sensors 350 dynamisch an den auf der Anlage laufenden Prozess angepasst werden kann. Dazu wird zunächst anhand mindestens eines Messwerts des Sensors 350, der über die Datenleitung 360 an den Stellungsregler 340 übermittelt wird, ein Zeitpunkt bestimmt, an dem der zweite Teilhubtest durchgeführt werden kann. Zusätzlich werden weitere Startbedingungen geprüft, u.a. ob das vorgegebene Zeitintervall zwischen zwei Teilhubtests bereits abgelaufen ist. Letzteres verhindert ein zu häufiges Ausführen des zweiten Teilhubtests.

Der zweite Teilhubtest kann z.B. zu Zeitpunkten ausgeführt werden, an denen der Sensor 350 Messwerte an den Stellungsregler 340 übermittelt, die anzeigen, dass der Durchfluss des Prozessmediums unter ein bestimmtes Niveau gefallen ist, z.B. 50% des maximal möglichen Durchflusses ($D_0 = D_{max}/2$). In diesem Fall kann der Stellungsregler 340 das Ventilglied des Sicherheitsventils 310 sicher einen Teil des Hubwegs von der Offen- bis hin zur Schließstellung verfahren, da der Durchfluss des Prozessmediums durch das Sicherheitsventil 310 ohnehin durch den laufenden Prozess eingeschränkt ist.

In diesem Beispiel ist die Durchflussmenge D direkt proportional zum Hubweg h. Zudem darf eine minimale Durchflussmenge $D_{min}$ von 25% des maximalen Durchflusses $D_{max}$ nicht unterschritten werden ($D_{min}$= $D_{max}/4$), wobei ein Sicherheitsabstand von 10% zum minimalen Durchfluss $D_{min}$ eingehalten werden soll. Der maximal zur Verfügung stehende Hub $h_{max}$ für den zweiten Teilhubtest ist demnach gegeben durch

$$h_{max} = 1 - ( D_{min} / D_0 ) ( 1 + x )$$

$$= 1 - ( (D_{max}/4) / (D_{max}/2) ) ( 1 + 10\% )$$

$$= 1 - ( 2 / 4 ) (1+0{,}1) = 45\%.$$

Der zweite Teilhubtest wird zu dem bestimmten Zeitpunkt durchgeführt. Dabei wird mithilfe des Sensors 350 überwacht, dass die bei der Bestimmung des Zeitpunkts vorgesehene Störung des Durchflusses eingehalten wird. Mithilfe des Sensors 350 kann zudem der maximale Hub während des Tests ständig neu ermittelt und an die aktuellen Messwerte bzw. den aktuellen Durchfluss angepasst werden. Dabei kann der maximale Hub wiederum z.B. aus dem aktuellen Durchfluss $D_0$ und einem vorgegebenen Sicherheitsabstand von z.B. 10% zu einem minimalen Durchfluss $D_{min}$ berechnet werden. Meldet der vorgelagerte Sensor 350 z.B. einen sich erhöhenden oder erniedrigenden aktuellen Durchfluss kann der maximale Hub auf diesen Durchfluss eingestellt werden.

Der zweite Teilhubtest kann demnach dynamisch an den aktuellen Durchfluss angepasst werden. Des Weiteren können Prozessinformationen anderer Sensoren bzw. Informationen über andere Stellungsregler oder Ventile einbezogen werden. Dabei kann das Verfahren so ausgeführt werden, dass ein vorgegebener maximaler Hub nicht überschritten wird. Über einen Drehmomentsensor kann die Einhaltung dieses und/oder der anderen Parameter (z.B. das Losbrechmoment, welches zu großen Überschwingern führen würde) garantiert werden.

Übersteigt der Durchfluss einen bestimmten Wert, kann eine Situation entstehen, in der der Durchfluss durch das Sicherheitsventil 310 nicht durch den gerade durchgeführten Teilhubtest weiter beschränkt werden darf. In diesem Fall bricht der Stellungsregler 340 den Test ab. Der erreichte Hub wird aufgezeichnet und weiter ausgewertet. Wurde ein Hub erreicht, der größer ist als der erste Hub, wurde der zweite Teilhubtest erfolgreich durchgeführt. Wurde der erste bzw. minimale Hub erreicht, wird der Test so gewertet, als ob der erste Teilhubtest ausgeführt worden wäre. Wird der minimale Hub nicht erreicht, gilt der Test als nicht ausgeführt. In diesem Fall wird eine entsprechende Fehlermeldung ausgegeben.

Mithilfe des Sensors 350 kann der ausgeführte Teilhubtest nicht nur überwacht, sondern auch gegen unbeabsichtigte oder unvorhergesehene Störungen des laufenden Prozesses abgesichert werden. Das vom Stellungsregler durchgeführte erfindungsgemäße Verfahren kann demnach häufiger durchgeführt werden, insbesondere ohne eine detaillierte Prüfung der Prozessparameter, Einzelentscheidungen oder individuelle Einschätzungen des aktuellen Zustands der gesamten Anlage.

In anderen Ausführungsbeispielen kann der Sensor 350 auch die Durchflussgeschwindigkeit, den Druck, die Temperatur, den pH-Wert oder die Dichte des Mediums messen. Der Einsatz eines Füllstandsensors ist ebenfalls denkbar.

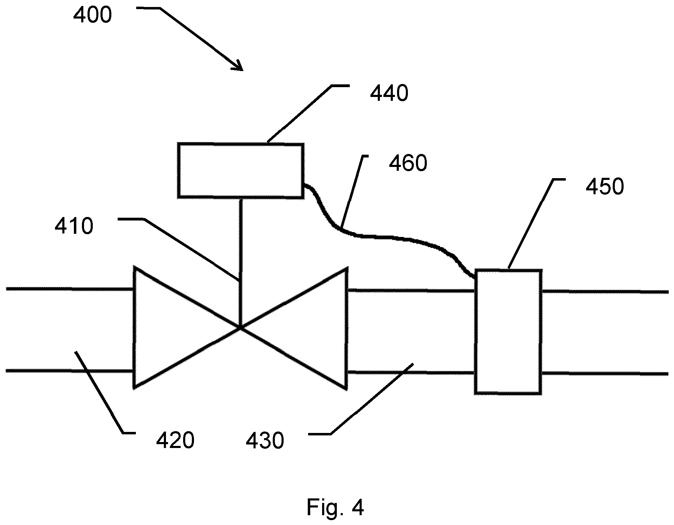

Fig. 4 zeigt einen Abschnitt 400 einer prozesstechnischen Anlage mit einem Sicherheitsventil 410 und einem Sensor 450, der im Ablauf 430 des Sicherheitsventils angeordnet ist, d.h. der Sensor 450 ist im Abschnitt 400 dem Sicherheitsventil 410 nachgelagert. Der nachgelagerte Sensor 450 kann ebenfalls ein Sensor zur Bestimmung der Durchflussmenge, Durchflussgeschwindigkeit, Temperatur, des pH-Wertes oder der Dichte des Prozessmediums sein. Die Funktionsfähigkeit des Sicherheitsventils 410 im Abschnitt 400 kann im Prinzip mit denselben Verfahren geprüft werden wie die Funktionsfähigkeit des Ventils 310 im Abschnitt 300. Der Unterschied besteht lediglich darin, an welcher Stelle die Messwerte zur Bestimmung des Zeitpunkts für einen Teilhubtest aufgenommen werden bzw. der laufende Prozess überwacht wird. Die Überwachung der Störung des Prozesses durch den zweiten/ersten Teilhubtest kann demnach an der Stelle erfolgen, die für den laufenden Prozess am relevantesten ist. Dadurch können Verzögerungen bei der Überwachung und der dynamischen Anpassung des Teilhubtests aufgrund der Trägheit des Prozesses bzw. der Anlage vermieden bzw. reduziert werden.

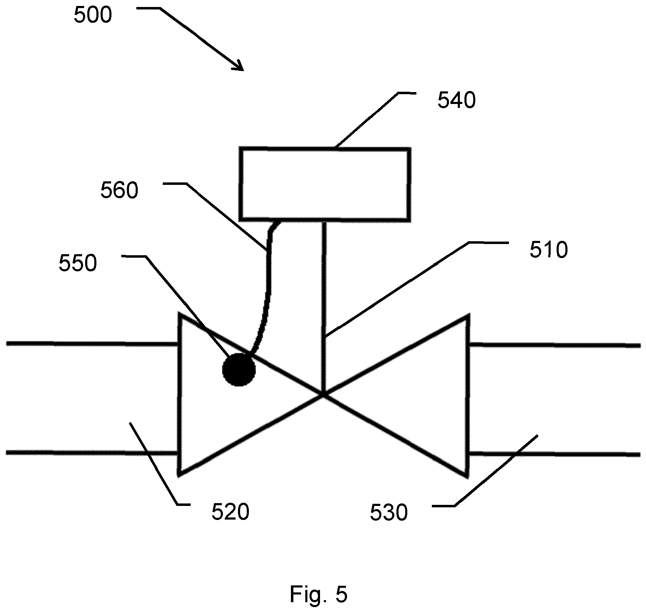

Fig. 5 zeigt einen Abschnitt 500 einer prozesstechnischen Anlage mit einem Sicherheitsventil 510 und einem integrierten Sensor 550. Abgesehen von dem Sensor 550 ist das Ventil 510 identisch zu dem Sicherheitsventil 310. Der Sensor 550 misst den Druck des Prozessmediums im Ventil 510. Er ist ebenfalls über eine Datenleitung 560 mit einem Stellungsregler 540 des Ventils 510 verknüpft. Der Stellungsregler 540 kann mithilfe des Sensors 550 die Funktionsfähigkeit des Ventils 510 mit einem der vorgeschlagenen Verfahren überprüfen. Die Verfahren können demnach nicht nur mit externen, sondern auch mit integrierten Sensoren durchgeführt werden.

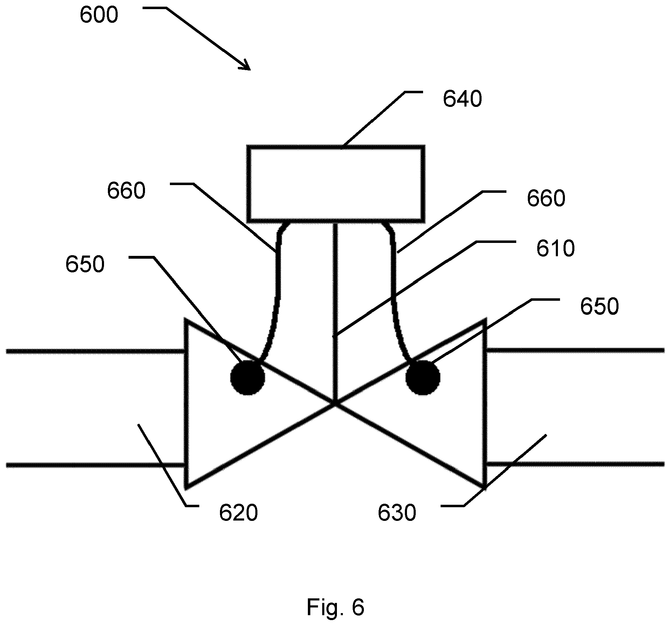

Fig. 6 zeigt einen Abschnitt 600 einer prozesstechnischen Anlage mit einem Sicherheitsventil 610, das zwei integrierte Sensoren 650 und einen Stellungsregler 640 umfasst. Abgesehen von den integrierten Sensoren 650 ist das Ventil 610 identisch zu den Sicherheitsventilen 310, 410 und 510. Beide Sensoren 650 sind mithilfe von Datenleitungen 660 an den Stellungsregler 640 angeschlossen. Die Sensoren 650 erfassen in diesem Beispiel den Druck des Prozessmediums an zwei unterschiedlichen Stellen innerhalb des Sicherheitsventils 610. Auf diese Weise kann eine Differenzdruckmessung durchgeführt werden, die z.B. Aussagen über den Druckverlust innerhalb des Ventils 610 zulassen. Dabei zeigt in vielen Fällen ein hoher Druckverlust eine Störung des Durchflusses des Prozessmediums durch das Sicherheitsventil an. Wird die Störung durch einen Teilhubtest verursacht, kann der Stellungsregler 640 entweder den Hubbereich entsprechend anpassen oder den Test ggf. sogar abbrechen. Dies stellt eine weitere Alternative dar, den zweiten Teilhubtest gemäß einem der erfindungsgemäßen Verfahren durchzuführen.

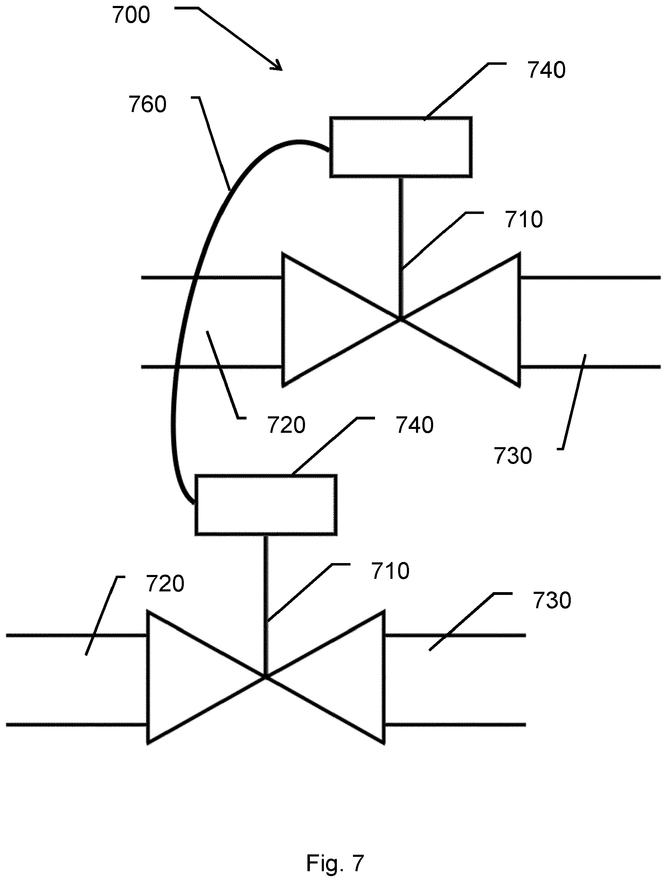

Fig. 7 zeigt einen Abschnitt einer Anlage mit einer Doppelstruktur, die zwei Sicherheitsventile 710 in parallel geschalteten Leitungen umfasst. Die Ventile 710 weisen - wie in den vorangegangenen Beispielen - Stellungsregler 740 auf. Die Stellungsregler 740 sind über eine Datenleitung 760 miteinander verbunden. Über die Datenleitung tauschen die Stellungsregler Informationen über die Stellung der Ventilglieder bzw. den aktuellen Status der Ventile 710 aus. Dieser Austausch umfasst insbesondere Zeitpunkte, an denen der zweite Teilhubtest durchgeführt werden kann. Die Stellungsregler wechseln sich dabei ab, so dass während eines Teilhubtests an einem Sicherheitsventil kein Teilhubtest an dem anderen Sicherheitsventil gestartet oder ausgeführt werden kann. Die Stellungsregler 740 können demnach auch als Sensoren für den jeweils anderen Stellungsregler 740 aufgefasst werden. Schließlich überwachen sie den Zustand oder eine Eigenschaft der Anlage bzw. eines Teils der Anlage, nämlich eines Sicherheitsventils 710.

In einer weiteren Ausführungsform können die Stellungsregler Informationen von integrierten oder vor- bzw. nachgelagerten Sensoren miteinander austauschen, z.B. über die Durchflussmenge des Prozessmediums durch einen der Zuläufe 720 oder Abläufe 730. Ein Sensor in einer der Leitungen kann demnach einem Stellungsregler in der anderen Leitung Informationen darüber liefern, dass eine bestimmte Durchflussmenge durch die eine Leitung fließt. Damit kann auf der anderen Leitung z.B. ein Teilhubtest mit 100% Hub durchgeführt werden, und umgekehrt.

Die vorgeschlagenen Verfahren sind nicht nur auf die gezeigten Abschnitte einer Anlage beschränkt, sondern können auch auf Teilen einer Anlage durchgeführt werden, die Kombinationen der in den Figuren 1 bis 5 gezeigten Varianten darstellen und/oder Ergänzungen mit weiteren Sensoren an weiteren Positionen umfassen, die darüber hinaus nicht auf die gezeigten Abschnitte beschränkt sein müssen.

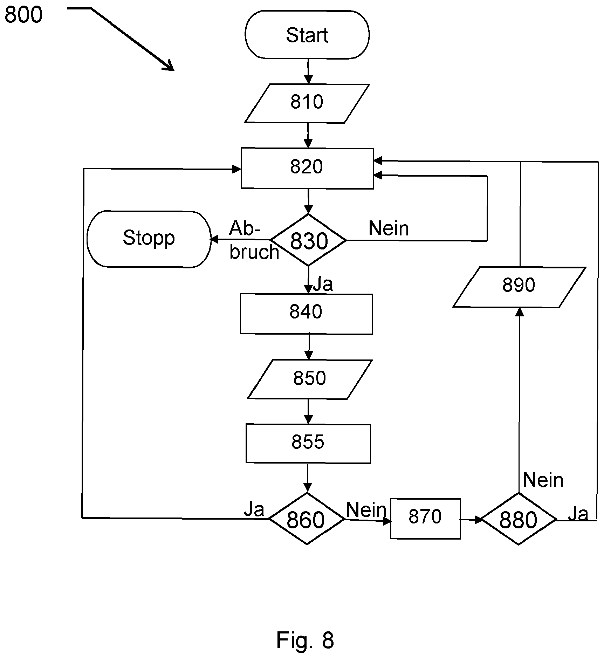

Fig. 8 zeigt einen Ablaufplan einer bevorzugten Ausführungsform eines erfindungsgemäßen Verfahrens. Das Verfahren beginnt mit Schritt 810. In Schritt 810 wird u.a. vorgegeben, in welchem Maß der Prozess maximal gestört werden darf. Diese Vorgabe stellt ein Abbruchkriterium für einen Teilhubtest dar, der im Rahmen des Verfahrens ausgeführt wird. Er wird in diesem Ausführungsbeispiel erst abgebrochen, wenn der Prozess tatsächlich in dem maximal vorgesehenen Maße gestört wird. Zudem wird ein erster bzw. minimaler Hub festgelegt, der mindestens erreicht werden muss, um den Teilhubtest als erfolgreich ansehen zu können. Anhand dieser Vorgabe können im weiteren Verlauf des Verfahrens Zeitpunkte bestimmt werden, an denen ein Teilhubtest mit einem größeren Hub als dem minimalen Hub gestartet bzw. durchgeführt werden kann. Zusätzlich werden weitere Startbedingungen festgelegt, wie z.B. der Zeitraum, der zwischen zwei Teilhubtests liegen soll, sowie weitere Abbruchkriterien definiert, um den Teilhubtest automatisiert abbrechen zu können.

Daraufhin wird in Schritt 820 geprüft, ob der Teilhubtest gestartet werden kann. Neben der Bestimmung des Zeitpunkts zum Durchführen des Teilhubtests werden dabei die weiteren Startbedingungen geprüft.

In Schritt 830 wird anhand der Ergebnisse der Prüfung entschieden, wie das Verfahren fortgesetzt wird. Konnte kein Zeitpunkt bestimmt werden, an dem der Teilhubtest durchgeführt werden kann, oder ist eine der weiteren Startbedingungen nicht erfüllt, wird das Verfahren mit dem Schritt 820 weitergeführt. Konnte ein Zeitpunkt bestimmt werden, an dem der Teilhubtest durchgeführt werden kann, und sind alle zu prüfenden Startbedingungen erfüllt, wird das Verfahren mit Schritt 840 fortgesetzt. Das Verfahren kann an dieser Stelle vom Anwender auch abgebrochen werden.

In Schritt 840 wird der Teilhubtest zu dem bestimmten Zeitpunkt gestartet und ausgeführt. Während der Ausführung wird die Bewegung des Ventilglieds und der Zustand oder die Eigenschaft der Anlage und/oder des Prozesses und/oder des Prozessmediums kontinuierlich überwacht. Der Teilhubtest wird abgebrochen, sobald mindestens ein Abbruchkriterium erfüllt ist.

In Schritt 850 wird der Verlauf des Teilhubtests dokumentiert und ausgegeben. Neben dem Verlauf des Tests werden ebenfalls die Startbedingungen und Abbruchkriterien dokumentiert.

In Schritt 855 wird geprüft, ob der minimale Hub überschritten werden konnte, bevor der Test abgebrochen wurde.

In Schritt 860 wird entschieden, wie das Verfahren fortgesetzt wird. Wurde das mindestens eine Abbruchkriterium nicht erfüllt und der Teilhubtest nicht abgebrochen, bevor der minimale Hub übertroffen wurde, war der Test erfolgreich und das Verfahren wird mit Schritt 820 weitergeführt. Wurde das mindestens eine Abbruchkriterium erfüllt und der zweite Teilhubtest abgebrochen, bevor der minimale Hub übertroffen wurde, wird das Verfahren mit Schritt 870 fortgesetzt.

In Schritt 870 wird geprüft, ob zumindest der minimale Hub erreicht wurde.

In Schritt 880 wird anhand der Prüfung in Schritt 870 entschieden, wie das Verfahren fortgesetzt wird. Wurde der erste Hub erreicht, wird der Test als erfolgreicher erster Teilhubtest gewertet und das Verfahren mit dem Schritt 820 weitergeführt. Wurde der erste Hub nicht erreicht, wird der Test als nicht erfolgreich registriert und das Verfahren mit dem Schritt 890 weitergeführt.

In Schritt 890 wird eine Fehlermeldung gesetzt, um dem Anwender anzuzeigen, dass kein Teilhubtest erfolgreich ausgeführt werden konnte. Nach dem Setzen der Fehlermeldung in Schritt 890 wird als nächstes wieder Schritt 820 ausgeführt.

Glossar

Anlage

Eine Anlage stellt eine planvolle Zusammenstellung von technischen Komponenten dar. Die Komponenten können Maschinen, Geräte, Apparate, Speicher, Leitungen bzw. Transportstrecken und/oder Steuer- bzw. Regelelemente umfassen. Sie können funktional, steuerungstechnisch und/oder sicherheitstechnisch miteinander verbunden, verschaltet bzw. verknüpft sein.

Anlagen werden in vielen unterschiedlichen Bereichen zu vielfältigen Zwecken betrieben. Dazu gehören beispielsweise verfahrens- oder prozesstechnische Anlagen, die in vielen Fällen der chemischen Industrie zuzurechnen sind. Der Begriff der Anlagen umfasst ebenfalls Raffinerien, Fernwärmesysteme, geo- oder solarthermische Anlagen, Anlagen zur Lebensmittelproduktion, Frischwasserversorgung oder Abwasserentsorgung, Biogasanlagen, etc.

Durchflussmenge

Als Durchflussmenge bezeichnet man die Menge eines fluiden Mediums, die sich in einer bestimmten Zeiteinheit durch einen bestimmten Querschnitt bewegt. Die Menge des Mediums kann dabei als Stoffmenge angegeben sein. Aus messtechnischen Gründen wird sie jedoch in vielen Fällen in einer Volumen- oder Masseneinheit angegeben.

Hub

Ein Hub eines Ventilglieds bezeichnet die Strecke, die das Ventilglied zurücklegt, wenn es von einer ersten Position zu einer zweiten Position verfahren wird.

Prozess

Ein (technischer) Prozess ist die Gesamtheit der Vorgänge in einer (technischen) Anlage. Ein laufender Prozess ist ein Prozess, der gerade auf einer Anlage bzw. im Normalbetrieb einer Anlage gefahren wird. Ein Prozess kann kontinuierlich bzw. fortlaufend sein (Erdölraffinierung, Fernwärmeversorgung oder Stromerzeugung) oder diskontinuierlich bzw. ein Batch- oder Chargenprozess sein (Teigherstellung zur Produktion von Backwaren, Medikamentenherstellung, Rösten von Kaffee).

Prozessmedium

Ein Prozessmedium ist ein fluides Medium, das im Rahmen eines Prozesses innerhalb einer Anlage umgewälzt bzw. transportiert wird und dabei ggf. verändert wird. Prozessmedien können Öle, Salze, Flüssigkeiten oder Gase sein.

Stellungsregler

Ein Stellungsregler ist dasjenige Element eines Ventils, das das Ventilglied des Ventils zum Öffnen oder Schließen des Ventils betätigt. Stellungsregler umfassen in vielen Fällen einen elektrischen oder einen fluidischen Antrieb, wobei letzterer entweder hydraulisch oder mit Druckluft betrieben werden kann.

Ventilglied

Ein Ventilglied ist dasjenige Element eines Ventils, das den Ventilsitz freigeben oder verschließen kann und z.B. von einem Stellungsregler betätigt wird, um das Ventil zu schließen bzw. zu öffnen.

Zustand einer Anlage, eines Prozesses oder eines Prozessmediums

Ein Zustand einer Anlage, eines Prozesses oder eines Prozessmediums ist durch eine oder mehrere momentane Eigenschaften der Anlage, des Prozesses oder des Prozessmediums definiert. Der Zustand eines Prozessmediums kann durch eine oder mehrere Eigenschaften des Mediums wie Temperatur, Druck, Dichte, pH-Wert, Fließgeschwindigkeit, etc. beschrieben werden. Der Zustand eines Prozesses umfasst die Eigenschaften aller am Prozess beteiligten Prozessmedien, der Endprodukte sowie weitere Eigenschaften, die z.B. die einzelnen technischen Vorgänge und deren Beziehung zueinander charakterisieren. Letztere umfassen z.B. Eigenschaften, die die Steuerung des Prozesses z.B. mithilfe eines Ventils bzw. Ventilglieds betreffen. Der Zustand einer Anlage umfasst die Eigenschaften der Prozessmedien in der Anlage, der Prozesse, die ggf. auf der Anlage laufen, sowie weitere Eigenschaften, die ggf. unabhängig von den Prozessen bzw. -medien sind. Zu den letzteren gehören die Bauart oder das Alter der technischen Komponenten, aber auch mechanische Belastungen der technischen Komponenten durch auf der Anlage laufende Prozesse.

Bezugszeichen

| | |
|---|---|
| 100 | Hub-Zeit- und die zugehörige Druck-Zeit-Kurve |
| 110 | Soll-Wert des Hubs |
| 120 | Ist-Wert des Drucks |
| 130 | Ist-Wert des Hubs |
| 140 | Losbrechdruck |
| 150 | Reserve des Losbrechdrucks |
| | |
| 200 | Hub-Druck-Kurve |
| 210 | Losbrech-Reserve |
| 220 | Schließdruck-Reserve |
| 230 | zwei Punkte zur Bestimmung der Interpolationsgerade |
| 240 | Interpolationsgerade |
| 250 | Druckwert bei Hub = 0 |
| 260 | 90% des Hubs, Ende des PST |
| | |
| 300 | Abschnitt einer Anlage |
| 310 | Sicherheitsventil |
| 320 | Zulauf |
| 330 | Ablauf |
| 340 | Stellungsregler |
| 350 | Sensor |
| 360 | Datenleitung |
| | |
| 400 | Abschnitt einer Anlage |
| 410 | Sicherheitsventil |
| 420 | Zulauf |
| 430 | Ablauf |
| 440 | Stellungsregler |
| 450 | Sensor |
| 460 | Datenleitung |
| | |
| 500 | Abschnitt einer Anlage |
| 510 | Sicherheitsventil |
| 520 | Zulauf |
| 530 | Ablauf |
| 540 | Stellungsregler |
| 550 | integrierter Sensor |
| 560 | Datenleitung |
| | |
| 600 | Abschnitt einer Anlage |
| 610 | Sicherheitsventil |
| 620 | Zulauf |
| 630 | Ablauf |
| 640 | Stellungsregler |
| 650 | integrierter Sensor |
| 660 | Datenleitung |
| | |
| 700 | Abschnitt einer Anlage mit einer Doppelstruktur |
| 710 | Sicherheitsventil |
| 720 | Zulauf |
| 730 | Ablauf |
| 740 | Stellungsregler |
| 760 | Datenleitung |
| | |
| 800 | Verfahren zum Überprüfen der Funktionsfähigkeit eines Sicherheitsventils |
| 810 | Vorgaben |

| | |
|---|---|
| 820 | Prüfen der Startbedingungen |
| 830 | Startbedingungen erfüllt? |
| 840 | Teilhubtest ausführen |
| 850 | Teilhubtest dokumentieren |
| 855 | Prüfen des erreichten Hubs |
| 860 | Wurde der minimale Hub übertroffen? |
| 870 | Prüfen des erreichten Hubs |
| 880 | Wurde der minimale Hub erreicht? |
| 890 | Ausgabe einer Fehlermeldung |

zitierte Literatur

zitierte Patentliteratur

DE 197 23 650 A1
WO 2009/013205 A1
DE 10 2018 103 324 B3
DE 10 2011 052 901 A1
DE 10 2005 004 477 A1
EP 1 500 857 A1

**Patentansprüche**

1. Verfahren zum Überprüfen der Funktionsfähigkeit eines Sicherheitsventils (310; 410; 510; 610; 710);

    1.1 wobei das Sicherheitsventil (310; 410; 510; 610; 710)

        1.1.1 ein Ventilglied und
        1.1.2 einen Stellungsregler (340; 440; 540; 640; 740) zur Regelung der Position des Ventilglieds aufweist;

    1.2 wobei das Sicherheitsventil (310; 410; 510; 610; 710) Teil einer Anlage ist, auf der ein Prozess mit einem Prozessmedium abläuft;
    1.3 wobei die Anlage mindestens einen Sensor (350; 450; 550; 650) zum Überwachen des Zustands oder einer Eigenschaft der Anlage und / oder des Prozesses und / oder des Prozessmediums aufweist;
    1.4 wobei das Verfahren einen ersten Teilhubtest und einen zweiten Teilhubtest zum Überprüfen der Funktionsfähigkeit des Sicherheitsventils (310; 410; 510; 610; 710) umfasst;

        1.4.1 wobei für den ersten Teilhubtest ein erster Hub des Ventilglieds durch den Stellungsregler (340; 440; 540; 640; 740) vorgegeben wird;
        wobei das Verfahren die folgenden Schritte umfasst:

    1.5 mindestens ein Messwert mindestens eines der Sensoren (350; 450; 550; 650) wird erfasst;
1.6 ausgehend von mindestens einem der Messwerte wird ein Zeitpunkt während des laufenden Prozesses bestimmt, an dem der zweite Teilhubtest durchgeführt werden kann;

1.6.1 wobei der zweite Teilhubtest einen zweiten Hub des Ventilglieds durch den Stellungsregler (340; 440; 540; 640; 740) aufweist, der größer ist als der vorgegebene erste Hub des ersten Teilhubtests und kleiner oder gleich dem Hub bei einem Vollhubtest; und
1.6.2 wobei der zweite Hub derart ausgelegt ist, dass der zweite Teilhubtest den Prozess höchstens in einem vorgegebenen Maße stören kann;

1.7 wobei der zweite Teilhubtest zu dem bestimmten Zeitpunkt durchgeführt wird.

2. Verfahren nach dem vorhergehenden Anspruch,
**dadurch gekennzeichnet,**
**dass** bei der Durchführung des ersten oder zweiten Teilhubtests mithilfe mindestens eines der Sensoren (350; 450; 550; 650) überwacht wird, dass der Prozess maximal in dem vorgegebenen Maße gestört wird.

3. Verfahren nach einem der vorhergehenden Ansprüche,
**dadurch gekennzeichnet,**
**dass** der erste oder zweite Teilhubtest abgebrochen wird, wenn mithilfe mindestens eines der Sensoren (350; 450; 550; 650) erkannt wird, dass der Prozess mehr als in dem vorgegebenen Maße gestört wird.

4. Verfahren nach einem der vorhergehenden Ansprüche,
**dadurch gekennzeichnet,**
**dass** mindestens einer der Messwerte

4.1 eine Durchflussmenge und/oder -geschwindigkeit und/oder
4.2 einen Füllstand und/oder
4.3 eine Temperatur und/oder
4.4 einen Druck und/oder
4.5 eine Dichte und/oder
4.6 einen pH-Wert und/oder
4.7 eine Stellung und/oder Position darstellt.

5. Verfahren nach einem der vorhergehenden Ansprüche,
**dadurch gekennzeichnet,**

5.1 dass das Sicherheitsventil (310; 410; 510; 610; 710) einen Zulauf (320; 420; 520; 620; 720) und einen Ablauf (330; 430; 530; 630; 730) aufweist;
5.2 wobei mindestens einer der Sensoren (350; 450; 550; 650) den Zustand oder eine Eigenschaft der Anlage und / oder des Prozesses und / oder des Prozessmediums im Zulauf (320; 420; 520; 620; 720) des Sicherheitsventils (310; 410; 510; 610; 710) überwacht; und/oder
5.3 wobei mindestens einer der Sensoren (350; 450; 550; 650) den Zustand oder eine Eigenschaft der Anlage und / oder des Prozesses und / oder des Prozessmediums innerhalb des Sicherheitsventils (310; 410; 510; 610; 710) überwacht; und/oder
5.4 wobei mindestens einer der Sensoren (350; 450; 550; 650) den Zustand oder eine Eigenschaft der Anlage und / oder des Prozesses und / oder des Prozessmediums im Ablauf (330; 430; 530; 630; 730) des Sicherheitsventils (310; 410; 510; 610; 710) überwacht.

6. Verfahren nach einem der vorhergehenden Ansprüche,
**dadurch gekennzeichnet,**

6.1 dass die Anlage ein weiteres Sicherheitsventil (310; 410; 510; 610; 710) umfasst;
6.2 wobei das weitere Sicherheitsventil (310; 410; 510; 610; 710) einen Zulauf (320; 420; 520; 620; 720) und einen Ablauf (330; 430; 530; 630; 730) aufweist;
6.3 wobei mindestens einer der Sensoren (350; 450; 550; 650) den Zustand oder eine Eigenschaft der Anlage und / oder des Prozesses und / oder des Prozessmediums im Zulauf (320; 420; 520; 620; 720) des weiteren Sicherheitsventils (310; 410; 510; 610; 710) überwacht; und/oder
6.4 wobei mindestens einer der Sensoren (350; 450; 550; 650) den Zustand oder eine Eigenschaft der Anlage und / oder des Prozesses und / oder des Prozessmediums innerhalb des weiteren Sicherheitsventils (310; 410; 510; 610; 710) überwacht; und/oder
6.5 wobei mindestens einer der Sensoren (350; 450; 550; 650) den Zustand oder eine Eigenschaft der Anlage und / oder des Prozesses und / oder des Prozessmediums im Ablauf (330; 430; 530; 630; 730) des weiteren Sicherheitsventils (310; 410; 510; 610; 710) überwacht.

7. Verfahren nach einem der vorhergehenden Ansprüche,
**gekennzeichnet durch folgenden Schritt:**
die Anlage wird so gesteuert, dass der zweite Teilhubtest zu einem vorgegebenen Zeitpunkt durchgeführt werden kann.

8. Verfahren nach einem der vorhergehenden Ansprüche,

**gekennzeichnet durch folgenden Schritt:**
wird innerhalb eines vorgegebenen Zeitraums kein Teilhubtest durchgeführt, wird eine Fehler- oder Warnmeldung ausgegeben.

9. Verfahren nach einem der vorhergehenden Ansprüche,
**gekennzeichnet durch folgende Schritte:**

9.1 abgesehen von dem bestimmten Zeitpunkt, an dem der zweite Teilhubtest durchgeführt werden kann, werden weitere Startbedingungen sowie mindestens ein Abbruchkriterium für den zweiten Teilhubtest vorgegeben;
9.2 die weiteren Startbedingungen werden geprüft, bevor der zweite Teilhubtest durchgeführt wird;
9.3 sind die weiteren Startbedingungen nicht erfüllt, wird der zweite Teilhubtest nicht durchgeführt und die Bestimmung des Zeitpunkts, an dem der zweite Teilhubtest durchgeführt werden kann, und die Prüfung der weiteren Startbedingungen werden wiederholt;
9.4 wurde ein Zeitpunkt, an dem der zweite Teilhubtest durchgeführt werden kann, bestimmt und sind die weiteren Startbedingungen erfüllt, wird der zweite Teilhubtest zu dem bestimmten Zeitpunkt gestartet;
9.5 während des zweiten Teilhubtests wird die Bewegung des Ventilglieds und der Zustand oder die Eigenschaft der Anlage und/oder des Prozesses und/oder des Prozessmediums kontinuierlich überwacht,
9.5.1 wobei der zweite Teilhubtest abgebrochen wird, sobald mindestens eines der Abbruchkriterien erfüllt ist;
9.6 der zweite Teilhubtest wird als erfolgreicher zweiter Teilhubtest registriert, wenn das Ventilglied einen Hub erreicht hat, der größer als der erste Hub ist;

9.6.1 der zweite Teilhubtest wird als erfolgreicher erster Teilhubtest registriert, wenn das Ventilglied einen Hub erreicht hat, der gleich dem ersten Hub ist;
9.6.2 der zweite Teilhubtest wird als nicht erfolgreich eingestuft, wenn das Ventilglied einen Hub erreicht hat, der kleiner als der erste Hub ist;

9.7 das Verfahren wird mit Schritt 9.2 fortgesetzt.

10. Computerprogramm,
**dadurch gekennzeichnet,**
**dass** es ausführbare Instruktionen beinhaltet, welche bei Ausführung auf einer Recheneinheit, einem Mikrocontroller, DSP, FPGA oder Computer oder auf einer Mehrzahl davon in einem Netzwerk ein Verfahren nach einem der vorhergehenden Ansprüche ausführt.

11. Datenträger, auf dem eine Datenstruktur gespeichert ist, die nach einem Laden in einen Arbeits- und/oder Hauptspeicher einer Recheneinheit, eines Mikrocontrollers, DSPs, FPGAs oder Computers oder einer Mehrzahl davon in einem Netzwerk ein Verfahren nach einem der vorhergehenden Verfahrensansprüche ausführt.

12. Computerprogramm-Produkt mit auf einem maschinenlesbaren Träger gespeicherten Programmcode-Mitteln, um alle Schritte gemäß einem der vorhergehenden Verfahrensansprüche durchzuführen, wenn das Programm auf einer Recheneinheit, einem Mikrocontroller, DSP, FPGA oder Computer oder auf einer Mehrzahl davon in einem Netzwerk ausgeführt wird.

13. Stellungsregler (340; 440; 540; 640; 740) eines Sicherheitsventils (310; 410; 510; 610; 710),
wobei der Stellungsregler (340; 440; 540; 640; 740) derart ausgebildet ist, dass er die Funktionsfähigkeit des Sicherheitsventils (310; 410; 510; 610; 710) mithilfe eines Verfahrens nach einem der vorherhergehenden Verfahrensansprüche überprüfen kann.

14. Sicherheitsventil (310; 410; 510; 610; 710) mit einem Stellungsregler (340; 440; 540; 640; 740),
wobei das Sicherheitsventil (310; 410; 510; 610; 710) derart ausgebildet ist, dass es ein Verfahren nach einem der vorherhergehenden Verfahrensansprüche ausführen kann.

15. Prozesstechnische Anlage mit einem Sicherheitsventil (310; 410; 510; 610; 710),
wobei die Anlage derart ausgebildet ist, dass sie die Funktionsfähigkeit des Sicherheitsventils (310; 410; 510; 610; 710) mithilfe eines Verfahrens nach einem der vorherhergehenden Verfahrensansprüche überprüfen kann.

**Claims**

1. A method for verifying the operability of a safety valve (310; 410; 510; 610; 710);

1.1 wherein the safety valve (310; 410; 510; 610; 710) comprises

1.1.1 a valve member and
1.1.2 a positioner (340; 440; 540; 640; 740) for controlling the position of the valve member;

1.2 wherein the safety valve (310; 410; 510; 610; 710) is part of a plant on which a process with a process medium runs;

1.3 wherein the plant comprises at least one sensor (350; 450; 550; 650) for monitoring the state or a property of the plant and/or the process and/or the process medium;

1.4 wherein the method comprises a first partial stroke test and a second partial stroke test for verifying the operability of the safety valve (310; 410; 510; 610; 710);

1.4.1 wherein for the first partial stroke test a first stroke of the valve member is predetermined by the positioner (340; 440; 540; 640; 740);

wherein the method comprises the following steps:

1.5 at least one measured value of at least one of the sensors (350; 450; 550; 650) is acquired;

1.6 based on at least one of the measured values, a point in time during the ongoing process is determined at which the second partial stroke test may be performed;

1.6.1 wherein the second partial stroke test has a second stroke of the valve member by the positioner (340; 440; 540; 640; 740) which is greater than the predetermined first stroke of the first partial stroke test and less than or equal to the stroke in a full stroke test; and

1.6.2 wherein the second stroke is such that the second partial stroke test can disrupt the process to no more than a predetermined extent;

1.7 wherein the second partial stroke test is performed at the predetermined point in time.

2. The method according to the preceding claim,
**characterized in that**
during the execution of the first or second partial stroke test, it is monitored with the aid of at least one of the sensors (350; 450; 550; 650) that the process is disturbed not more than to the predetermined extent.

3. The method according to any one of the preceding claims,
**characterized in that**
the first or second partial stroke test is aborted if it is detected by means of at least one of the sensors (350; 450; 550; 650) that the process is disturbed more than to the predefined extent.

4. The method according to any one of the preceding claims,
**characterized in that**
at least one of the measured values represents

4.1 a flow rate and/or velocity and/or
4.2 a filling level and/or
4.3 a temperature and/or
4.4 a pressure and/or
4.5 a density and/or
4.6 a pH value and/or
4.7 a position.

5. The method according to any one of the preceding claims,
**characterized in that**

5.1 the safety valve (310; 410; 510; 610; 710) has an inlet (320; 420; 520; 620; 720) and an outlet (330; 430; 530; 630; 730);
5.2 wherein at least one of the sensors (350; 450; 550; 650) monitors the condition or a property of the plant and/or the process and/or the process medium in the inlet (320; 420; 520; 620; 720) of the safety valve (310; 410; 510; 610; 710); and/or
5.3 wherein at least one of the sensors (350; 450; 550; 650) monitors the condition or a property of the plant and/or the process and/or the process medium within the safety valve (310; 410; 510; 610; 710); and/or
5.4 wherein at least one of the sensors (350; 450; 550; 650) monitors the state or a property of the plant and/or the process and/or the process medium in the outlet (330; 430; 530; 630; 730) of the safety valve (310; 410; 510; 610; 710).

6. The method according to any of the preceding claims,
**characterized in that**

6.1 the system comprises a further safety valve (310; 410; 510; 610; 710);
6.2 wherein the further safety valve (310; 410; 510; 610; 710) has an inlet (320; 420; 520; 620; 720) and an outlet (330; 430; 530; 630; 730);
6.3 wherein at least one of the sensors (350; 450; 550; 650) monitors the state or a property of the plant and/or the process and/or the process medium in the inlet (320; 420; 520; 620; 720) of the further safety valve (310; 410; 510; 610; 710); and/or
6.4 wherein at least one of the sensors (350; 450; 550; 650) monitors the condition or a property of the plant and/or the process and/or the process medium within the further safety valve (310; 410; 510; 610; 710); and/or
6.5 wherein at least one of the sensors (350;

450; 550; 650) monitors the state or a property of the plant and/or the process and/or the process medium in the outlet (330; 430; 530; 630; 730) of the further safety valve (310; 410; 510; 610; 710).

7. The method according to any one of the preceding claims,
**characterized by the following step:**
the system is controlled such that the second partial stroke test can be performed at a predetermined time.

8. The method according to any one of the preceding claims,
**characterized by the following step:**
if no partial stroke test is performed within a predetermined period of time, an error or warning message is issued.

9. The method according to any one of the preceding claims,
**characterized by the following steps:**

9.1 apart from the determined time at which the second partial stroke test can be carried out, further starting conditions and at least one abort criterion for the second partial stroke test are specified;
9.2 the further start conditions are checked before the second partial stroke test is performed;
9.3 if the further start conditions are not fulfilled, the second partial stroke test is not performed and the determination of the time at which the second partial stroke test can be performed and the checking of the further start conditions are repeated;
9.4 if a time at which the second partial stroke test can be performed has been determined and the further start conditions are fulfilled, the second partial stroke test is started at the determined time;
9.5 during the second partial stroke test, the movement of the valve member and the state or property of the plant and/or the process and/or the process medium are continuously monitored,
9.5.1 the second partial stroke test is aborted as soon as at least one of the abort criteria is met;
9.6 the second partial stroke test is registered as a successful second partial stroke test if the valve member has reached a stroke which is greater than the first stroke;

9.6.1 the second partial stroke test is registered as a successful first partial stroke test if the valve member has reached a stroke equal to the first stroke;

9.6.2 the second partial stroke test is registered as unsuccessful if the valve member has reached a stroke that is less than the first stroke;

9.7 the method continues with step 9.2.

10. A computer program,
**characterized in that**
it contains executable instructions which, when executed on a computing unit, microcontroller, DSP, FPGA or computer or on a plurality thereof in a network, executes a method according to any one of the preceding claims.

11. A data carrier on which a data structure is stored which, after being loaded into a working and/or main memory of a computing unit, a microcontroller, DSP, FPGA or computer or a plurality thereof in a network, executes a method according to any one of the preceding method claims.

12. A computer program product comprising program code means stored on a machine-readable medium for performing all of the steps according to any one of the preceding method claims when the program is executed on a computing unit, a microcontroller, DSP, FPGA or computer or on a plurality thereof in a network.

13. A positioner (340; 440; 540; 640; 740) of a safety valve (310; 410; 510; 610; 710),
wherein the positioner (340; 440; 540; 640; 740) is configured to verify the operability of the safety valve (310; 410; 510; 610; 710) by means of a method according to any one of the preceding method claims.

14. A safety valve (310; 410; 510; 610; 710) with a positioner (340; 440; 540; 640; 740),
wherein the safety valve (310; 410; 510; 610; 710) is configured in such a way that it can perform a method according to any one of the preceding method claims.

15. A process plant having a safety valve (310; 410; 510; 610; 710),
wherein the plant is configured in such a way that it can verity the operability of the safety valve (310; 410; 510; 610; 710) by means of a method according to any one of the preceding method claims.

**Revendications**

1. Procédé de contrôle du bon fonctionnement d'une soupape de sécurité (310 ; 410 ; 510 ; 610 ; 710) ;

1.1 dans lequel la soupape de sécurité (310 ; 410 ; 510 ; 610 ; 710) comprend

 1.1.1 un élément de soupape et
 1.1.2 un positionneur (340 ; 440 ; 540 ; 640 ; 740) pour réguler la position de l'élément de soupape ;

1.2 dans laquelle la soupape de sécurité (310 ; 410 ; 510 ; 610 ; 710) fait partie d'une installation sur laquelle se déroule un processus avec un fluide de processus ;
1.3 dans lequel l'installation comprend au moins un capteur (350 ; 450 ; 550 ; 650) pour surveiller l'état ou une caractéristique de l'installation et/ou du processus et/ou du fluide de processus ;
1.4 dans lequel le procédé comprend un premier test de course partielle et un second test de course partielle pour vérifier le fonctionnement de la soupape de sécurité (310 ; 410 ; 510 ; 610 ; 710) ;

 1.4.1 dans lequel, pour le premier test de course partielle, une première levée de l'élément de soupape est prédéfinie par le positionneur (340 ; 440 ; 540 ; 640 ; 740) ; dans lequel le procédé comprend les étapes suivantes :

1.5 au moins une valeur de mesure d'au moins un des capteurs (350 ; 450 ; 550 ; 650) est acquise ;
1.6 à partir d'au moins une des valeurs mesurées, on détermine un instant pendant le processus en cours, auquel le deuxième test de course partielle peut être effectué ;

 1.6.1 dans lequel le second test de course partielle comprend une seconde levée de l'élément de soupape par le positionneur (340 ; 440 ; 540 ; 640 ; 740) qui est supérieure à la première levée prédéterminée du premier test de course partielle et inférieure ou égale à la levée lors d'un test de course complète ; et
 1.6.2 dans lequel la deuxième course est telle que le deuxième test de course partielle peut perturber le processus au plus dans une mesure prédéterminée ;

1.7 dans lequel le deuxième test de course partielle est effectué à l'instant déterminé.

**2.** Procédé selon la revendication précédente, **caractérisé en ce que** lors de l'exécution du premier ou du deuxième test de course partielle, on surveille, à l'aide d'au moins un des capteurs (350 ; 450 ; 550 ; 650), que le processus est perturbé au maximum dans la mesure prédéterminée.

**3.** Procédé selon l'une quelconque des revendications précédentes, **caractérisé en ce que** le premier ou le deuxième test de course partielle est interrompu si, à l'aide d'au moins un des capteurs (350 ; 450 ; 550 ; 650), il est détecté que le processus est perturbé au-delà du niveau prédéterminé.

**4.** Procédé selon l'une quelconque des revendications précédentes, **caractérisé en ce que** au moins une des valeurs mesurées représente

 4.1 un débit et/ou une vitesse d'écoulement et/ou
 4.2 un niveau de remplissage et/ou
 4.3 une température et/ou
 4.4 une pression et/ou
 4.5 une densité et/ou
 4.6 une valeur de pH et/ou
 4.7 une position et/ou un emplacement.

**5.** Procédé selon l'une quelconque des revendications précédentes, **caractérisé en ce que**

 5.1 la soupape de sécurité (310 ; 410 ; 510 ; 610 ; 710) comprend une amenée (320 ; 420 ; 520 ; 620 ; 720) et un écoulement (330 ; 430 ; 530 ; 630 ; 730) ;
 5.2 dans lequel au moins l'un des capteurs (350 ; 450 ; 550 ; 650) surveille l'état ou une caractéristique de l'installation et/ou du processus et/ou du fluide de processus dans l'amenée (320 ; 420 ; 520 ; 620 ; 720) de la soupape de sécurité (310 ; 410 ; 510 ; 610 ; 710) ; et/ou
 5.3 dans lequel au moins l'un des capteurs (350 ; 450 ; 550 ; 650) surveille l'état ou une caractéristique de l'installation et/ou du processus et/ou du fluide de processus à l'intérieur de la soupape de sécurité (310 ; 410 ; 510 ; 610 ; 710) ; et/ou
 5.4 dans lequel au moins l'un des capteurs (350 ; 450 ; 550 ; 650) surveille l'état ou une caractéristique de l'installation et/ou du processus et/ou du fluide de processus dans l'écoulement (330 ; 430 ; 530 ; 630 ; 730) de la soupape de sécurité (310 ; 410 ; 510 ; 610 ; 710).

**6.** Procédé selon l'une quelconque des revendications précédentes, **caractérisé en ce que**

 6.1 l'installation comprend une autre soupape de sécurité (310 ; 410 ; 510 ; 610 ; 710) ;

6.2 dans lequel l'autre soupape de sécurité (310 ; 410 ; 510 ; 610 ; 710) comprend une amenée (320 ; 420 ; 520 ; 620 ; 720) et un écoulement (330 ; 430 ; 530 ; 630 ; 730) ;

6.3 dans lequel au moins un des capteurs (350 ; 450 ; 550 ; 650) surveille l'état ou une caractéristique de l'installation et/ou du processus et/ou du fluide de processus dans l'amenée (320 ; 420 ; 520 ; 620 ; 720) de l'autre soupape de sécurité (310 ; 410 ; 510 ; 610 ; 710) ; et/ou

6.4 dans lequel au moins l'un des capteurs (350 ; 450 ; 550 ; 650) surveille l'état ou une caractéristique de l'installation et/ou du processus et/ou du fluide de processus à l'intérieur de l'autre soupape de sécurité (310 ; 410 ; 510 ; 610 ; 710) ; et/ou

6.5 dans lequel au moins l'un des capteurs (350 ; 450 ; 550 ; 650) surveille l'état ou une caractéristique de l'installation et/ou du processus et/ou du fluide de processus dans l'écoulement (330 ; 430 ; 530 ; 630 ; 730) de l'autre soupape de sécurité (310 ; 410 ; 510 ; 610 ; 710).

7. Procédé selon l'une quelconque des revendications précédentes,
**caractérisé par l'étape suivante** :
l'installation est commandée de manière à ce que le deuxième test de course partielle puisse être effectué à un instant prédéterminé.

8. Procédé selon l'une quelconque des revendications précédentes,
**caractérisé par l'étape suivante** :
si aucun test de course partielle n'est effectué dans un délai prédéterminé, un message d'erreur ou d'avertissement est émis.

9. Procédé selon l'une des revendications précédentes,
**caractérisé par les étapes suivantes** :

9.1 outre l'instant déterminé auquel le deuxième test de course partielle peut être effectué, d'autres conditions de démarrage ainsi qu'au moins un critère d'interruption pour le deuxième test de course partielle sont prédéfinis ;

9.2 les autres conditions de départ sont vérifiées avant que le deuxième test de course partielle ne soit effectué ;

9.3 si les autres conditions de départ ne sont pas satisfaites, le deuxième test de course partielle n'est pas effectué et la détermination du moment où le deuxième test de course partielle peut être effectué et la vérification des autres conditions de départ sont répétées ;

9.4 si un moment où le deuxième test de course partielle peut être effectué a été déterminé et si les autres conditions de démarrage sont satisfaites, le deuxième test de course partielle est lancé à l'instant déterminé ;

9.5 pendant le deuxième test de course partielle, le mouvement de l'élément de soupape et l'état ou la caractéristique de l'installation et/ou du processus et/ou du fluide de processus sont surveillés en permanence,

9.5.1 dans lequel le deuxième test de course partielle est interrompu dès qu'au moins un des critères d'interruption est rempli ;

9.6 le deuxième test de course partielle est enregistré comme un deuxième test de course partielle réussi lorsque l'élément de soupape a atteint une levée supérieure à la première levée ;

9.6.1 le deuxième test de course partielle est enregistré comme un premier test de course partielle réussi si l'élément de soupape a atteint une levée égale à la première levée ;

9.6.2 le deuxième test de course partielle est enregistré comme non réussi si l'élément de soupape a atteint une levée inférieure à la première levée ;

9.7 le procédé est poursuivi à l'étape 9.2.

10. Programme d'ordinateur,
**caractérisé**
**en ce qu'**il comprend des instructions exécutables qui, lorsqu'elles sont exécutées sur une unité de calcul, un microcontrôleur, un DSP, un FPGA ou un ordinateur ou sur une pluralité d'entre eux dans un réseau, exécutent un procédé selon l'une quelconque des revendications précédentes.

11. Support de données sur lequel est stockée une structure de données qui, après avoir été chargée dans une mémoire de travail et/ou une mémoire principale d'une unité de calcul, d'un microcontrôleur, d'un DSP, d'un FPGA ou d'un ordinateur ou d'une pluralité de ceux-ci dans un réseau, exécute un procédé selon l'une quelconque des revendications de procédé précédentes.

12. Produit de programme d'ordinateur comprenant des moyens de code de programme enregistrés sur un support lisible par machine pour exécuter toutes les étapes selon l'une quelconque des revendications de procédé précédentes lorsque le programme est exécuté sur une unité de traitement, un microcontrôleur, un DSP, un FPGA ou un ordinateur ou sur une pluralité de ceux-ci dans un réseau.

13. Positionneur (340 ; 440 ; 540 ; 640 ; 740) d'une soupape de sécurité (310 ; 410 ; 510 ; 610 ; 710),
dans lequel le positionneur (340 ; 440 ; 540 ; 640 ;

740) est adapté pour vérifier le bon fonctionnement de la soupape de sécurité (310 ; 410 ; 510 ; 610 ; 710) à l'aide d'un procédé selon l'une quelconque des revendications de procédé précédentes.

14. Soupape de sécurité (310 ; 410 ; 510 ; 610 ; 710) avec un positionneur (340 ; 440 ; 540 ; 640 ; 740), dans laquelle la soupape de sécurité (310 ; 410 ; 510 ; 610 ; 710) est conçue de manière à pouvoir mettre en oeuvre un procédé selon l'une des revendications de procédé précédentes.

15. Installation de traitement comprenant une soupape de sécurité (310 ; 410 ; 510 ; 610 ; 710), dans laquelle l'installation est conçue de manière à pouvoir vérifier le bon fonctionnement de la soupape de sécurité (310 ; 410 ; 510 ; 610 ; 710) à l'aide d'un procédé selon l'une des revendications de procédé précédentes.

Fig. 1

Fig. 2

300

350   360   340

310

320   330

Fig. 3

Fig. 4

Fig. 5

Fig. 6

700

740

760

710

720

740

730

720

710

730

Fig. 7

800

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19723650 A1
- WO 2009013205 A1
- DE 102018103324 B3
- DE 102011052901 A1
- DE 102005004477 A1
- EP 1500857 A1
- US 2017335992 A1